# FASCICULE DE BREVET EUROPEEN

(11) **EP 3 355 150 B1**
(45) Date de publication et mention de la délivrance du brevet: **15.05.2019**
(21) Numéro de dépôt: 17206827.2
(22) Date de dépôt: 12.12.2017
(51) Int. Cl.: G05D 1/10, G08G 5/00, G08G 5/02, F16F 15/00

(54) **PROCÉDÉ ET SYSTÈME D'AIDE À L'APPROCHE ET LA MISE EN VOL STATIONNAIRE RELATIF D'UN GIRAVION VIS-À-VIS D'UNE CIBLE MOBILE**
HILFSVERFAHREN UND -SYSTEM ZUR ANNÄHERUNG UND ZUM RELATIV STATIONÄREN FLUG EINES DREHFLÜGELFLUGZEUGS IN BEZUG AUF EIN BEWEGLICHES ZIEL
A METHOD AND A SYSTEM FOR ASSISTING A ROTORCRAFT TO APPROACH AND HOVER RELATIVE TO A MOBILE TARGET

(30) Priorité: 27.01.2017 FR 1700085
(43) Date de publication de la demande: 01.08.2018
(73) Titulaire: Airbus Helicopters, 13725 Marignane Cedex (FR)
(72) Inventeur: CANALE, Nicolas, 13006 Marseille (FR)
(74) Mandataire: GPI & Associés

(56) Documents cités:
- EP-A1- 0 141 575
- US-A- 4 029 271
- US-A1- 2009 157 233

## Description

La présente invention est du domaine des systèmes d'assistance et d'aide au pilotage des giravions et plus particulièrement des giravions destinés à des missions de recherche et de sauvetage en mer.

La présente invention concerne un procédé d'établissement d'une trajectoire d'approche d'un giravion sur une cible mobile et de mise en vol stationnaire relatif du giravion par rapport à la cible mobile. La présente invention concerne également un système d'établissement d'une trajectoire d'approche et de mise en vol stationnaire relatif du giravion par rapport à la cible mobile.

Les giravions sont des appareils volants qui se distinguent principalement des autres aéronefs motorisés par leur capacité à évoluer aussi bien en vol de croisière à vitesses élevées qu'en vol à basses vitesses ou en vol stationnaire. Une telle capacité est procurée par l'exploitation d'au moins une voilure tournante, tel un rotor principal à axe de rotation sensiblement vertical.

Un giravion comporte généralement aujourd'hui un pilote automatique se substituant au pilote du giravion et permettant notamment de suivre une trajectoire de vol prédéfinie. La progression du giravion est évaluée et corrigée si besoin par le pilote automatique en temps réel au regard de diverses informations fournies par l'instrumentation de bord du giravion.

Un giravion comporte également un système de gestion de vol désigné par l'acronyme « FMS » à savoir en langue anglaise « Flight Management System ». Ce système de gestion de vol FMS permet notamment, associé au pilote automatique du giravion, la réalisation et le suivi de la trajectoire de vol prédéterminée.

Dans le cadre des missions de recherche et de sauvetage en mer, des giravions sont utilisés quotidiennement pour secourir des bateaux. Des opérations de treuillage d'équipes d'intervention, de rapatriement de blessés ou de naufragés sont réalisées à partir des giravions sur ces bateaux.

Pour ces missions de recherche et de sauvetage, un giravion doit pouvoir intervenir en toute sécurité et le plus rapidement possible, dans un environnement souvent hostile, par exemple par un fort vent, une faible visibilité, voire de nuit. En effet, la survie des naufragés dépend parfois de la rapidité d'intervention. En outre, ces missions sont parfois effectuées loin des côtes. L'autonomie de vol des giravions étant limitée, il est donc important d'optimiser la trajectoire suivie par le giravion pour atteindre le bateau à secourir.

Ces interventions sont susceptibles d'être effectuées sur tous types de bateaux, aussi bien des bateaux de petites à moyennes tailles, tels des bateaux de plaisance ou des chalutiers que des navires de très gros tonnages tels des porte-conteneurs ou des ferries. De plus, selon leurs caractéristiques, les dommages subis et/ou la météorologie, ces bateaux ne sont pas toujours à même de coopérer afin d'arrêter leur progression ou tout au moins d'adapter leur route et leur allure, notamment vis-à-vis de la direction du vent, pour faciliter l'opération de secours. De fait, l'intervention peut se dérouler sur un bateau arrêté ou bien en mouvement.

Pour une telle intervention de secours, le giravion doit être mis en vol stationnaire à la verticale du bateau lorsque celui est à l'arrêt afin de permettre la réalisation de l'intervention de secours. Par contre, lorsque le bateau est en mouvement, le giravion doit être positionné à la verticale du bateau et se caler sur la route et la vitesse du bateau, établissant ainsi un vol stationnaire relatif du giravion vis-à-vis du bateau.

Il existe dans le système de gestion de vol FMS une fonction de réalisation d'une mise en vol stationnaire automatique du giravion à la verticale d'une cible fixe, tel un bateau à l'arrêt. A partir des coordonnées de cette cible fixe, le système de gestion de vol FMS détermine une trajectoire d'approche et une trajectoire de descente dans l'axe du vent pour une mise en vol stationnaire automatique à une distance prédéfinie de la cible et face au vent. Le pilote automatique assure le suivi de ces trajectoires d'approche et de descente, notamment le guidage horizontal et vertical du giravion ainsi que la réduction de sa vitesse.

Par exemple, le document US 4029271 décrit un système de contrôle automatique d'un aéronef à voilure tournante pour permettre la réalisation d'un vol stationnaire à une position et une altitude désirées, cette position et cette altitude désirées étant connues, fixes et fournies par le pilote de l'aéronef.

On connait également le document EP 0141575 qui décrit un dispositif d'aide au pilotage d'un giravion pour la localisation d'un objet, tel un navire ou bien une personne en mer à secourir, et la navigation jusqu'à cet objet. Ce dispositif d'aide au pilotage permet notamment de définir une trajectoire d'approche sur cet objet et de réaliser un vol stationnaire au dessus de cet objet.

Le système de gestion de vol FMS peut également comporter une fonction permettant de suivre la progression d'une cible mobile après avoir préalablement mémorisé et exploité sa position, sa vitesse et sa route. Cette fonction permet d'estimer un point de rendez-vous avec la cible mobile en prenant en compte la progression du giravion et de réaliser une trajectoire de ralliement au point de rendez-vous en fournissant un guidage uniquement latéral au giravion par l'intermédiaire du pilote automatique. Une telle trajectoire de ralliement est connue par l'expression en langue anglaise « direct to ».

Par exemple, le document EP 0141575 décrit un système de navigation permettant d'atteindre une cible, par exemple un naufragé en mer, et de réaliser un vol stationnaire au dessus de cette cible. Ce système utilise un modèle de vol prédéterminé comportant une trajectoire s'écartant dans un premier temps de la cible en vent arrière et se dirigeant vers la cible face au vent, à des altitudes présélectionnées et des vitesses prédéterminées.

On connait aussi le document US 2009/0157233 qui décrit un système et un procédé de suivi et de surveillance d'une cible de façon autonome par un véhicule. Ce système comporte un module de reconnaissance automatique d'une cible permettant, à partir d'informations vidéo, de déterminer les caractéristiques de la cible et de sa trajectoire. Le système peut ensuite en déduire des caractéristiques futures de la cible, en particulier une trajectoire prédictive.

L'approche finale vers la cible mobile et notamment la trajectoire de descente doivent ensuite être déterminées par l'équipage du giravion sans assistance spécifique de l'avionique embarquée dans le giravion et réalisées manuellement. Cette trajectoire de descente doit de préférence être effectuée dans le sillage de la cible mobile, à savoir dans un plan vertical passant par sa route. De la sorte, les projections de la trajectoire de descente et de la route de la cible mobile sur un plan horizontal sont confondues. En aéronautique, une route étant généralement définie par sa projection au sol, donc sur un plan horizontal, on peut considérer que la trajectoire de descente est égale à la route de la cible mobile.

Toutefois, cette trajectoire de descente peut être influencée par les conditions de vent, à savoir sa direction et sa vitesse, qui ne permettent pas toujours au giravion de suivre le sillage de la cible mobile. En effet, des limitations de fonctionnement du giravion, notamment vis-à-vis d'un fort vent arrière ou latéral subi par le giravion, interdisent certaines directions de vol. Les limitations de fonctionnement du giravion sont donc à prendre en compte pour définir la trajectoire de descente du giravion.

D'autre part, la position, la route et la vitesse de la cible mobile à atteindre sont généralement connues de l'équipage du giravion au moment du déclenchement de l'intervention ou bien au moment du décollage du giravion. Par contre, leurs évolutions au cours du vol du giravion vers la cible ne sont pas toujours connues. De fait, un survol préalable de la cible mobile est généralement effectué pour s'assurer qu'il s'agit bien de la cible recherchée. Ce survol est une perte de temps non négligeable vis-à-vis de l'intervention et diminue également l'autonomie du giravion.

Une intervention de secours nécessite donc la gestion de nombreux paramètres, concernant aussi bien le giravion et la météorologie que la cible à secourir, rendant la mission complexe avec une charge de travail élevée pour l'équipage du giravion. L'intervention sur une cible mobile, tel un bateau en mouvement, est plus complexe et plus difficile à réaliser et impose une charge de travail plus élevée à l'équipage du giravion.

La présente invention a alors pour objets un procédé et un système d'établissement d'une trajectoire d'approche d'un giravion sur une cible mobile et de mise en vol stationnaire relatif du giravion par rapport à cette cible permettant de s'affranchir des limitations mentionnées ci-dessus. La présente invention vise en particulier la détermination automatique des caractéristiques de la trajectoire d'approche et de mise en vol stationnaire relatif du giravion vis-à-vis d'une cible mobile ainsi que sa réalisation automatique par l'intermédiaire du pilote automatique du giravion.

Dans la suite du texte, on désignera par « première position », « première vitesse » et « première route » respectivement la position, la vitesse et la route d'une cible mobile, par « deuxième position », « deuxième vitesse » et « deuxième route » respectivement la position, la vitesse et la route d'un giravion et par « troisième vitesse » la vitesse du vent.

Selon l'invention, un procédé d'établissement d'une trajectoire d'approche d'un giravion sur une cible mobile et de mise en vol stationnaire relatif d'un giravion vis-à-vis de cette cible mobile est destiné à un giravion. Un tel giravion est muni de :
- un système de gestion de vol FMS comportant au moins un calculateur et au moins une mémoire,
- un dispositif d'acquisition d'une première position, d'une première vitesse et d'une première route d'une cible mobile,
- un dispositif de localisation permettant de fournir une deuxième position, une deuxième vitesse et une deuxième route du giravion, et
- un dispositif de mesure des conditions de vent à proximité du giravion permettant de mesurer une troisième vitesse et une direction du vent subi par le giravion.

Le procédé d'établissement d'une trajectoire d'approche d'un giravion sur une cible mobile et de mise en vol stationnaire relatif du giravion vis-à-vis de la cible selon l'invention comporte les phases suivantes :
- une phase préliminaire d'établissement d'une trajectoire initiale d'approche et de mise en vol stationnaire relatif du giravion vis-à-vis de la cible, la trajectoire initiale étant définie comme une trajectoire active que doit suivre le giravion pour atteindre la cible,
- une phase d'établissement d'une trajectoire requise d'approche et de mise en vol stationnaire relatif du giravion vis-à-vis de la cible en fonction d'éventuelles variations des caractéristiques de la cible, du giravion et du vent subi par le giravion, la phase d'établissement d'une trajectoire requise étant réalisée au cours du vol du giravion en direction de la cible, et
- une phase de mise à jour de la trajectoire active par la trajectoire requise afin de garantir la sécurité de la trajectoire active.

La phase préliminaire d'établissement de la trajectoire initiale et la phase d'établissement de la trajectoire requise comportent de façon commune les étapes suivantes :
- une étape de mesure des caractéristiques de la cible, du giravion et du vent subi par le giravion munie des sous-étapes suivantes :
   - une première acquisition de la première position, de la première vitesse et de la première route de la cible,
   - une deuxième acquisition de la deuxième position, de la deuxième vitesse et de la deuxième route du giravion, et
   - une troisième acquisition de la troisième vitesse et de la direction du vent subi par le giravion,
- une étape d'établissement des caractéristiques de la trajectoire d'approche et de mise en vol stationnaire relatif du giravion vis-à-vis de la cible munie des sous-étapes suivantes :
   - une première détermination d'une trajectoire prédite de la cible,
   - une deuxième détermination d'un axe de descente pour le giravion vers la cible,
   - une troisième détermination d'un point MRK de mise en vol stationnaire relatif du giravion vis-à-vis de la cible et d'une position PTP prédite d'interception de la cible par le giravion, le point MRK de mise en vol stationnaire relatif et la position PTP prédite d'interception étant situés sur l'axe de descente,
   - une quatrième détermination d'un point TDN de début de descente pour le giravion vers la cible, le point TDN de début de descente étant situé sur l'axe de descente passant par le point MRK de mise en vol stationnaire relatif, et
   - une cinquième détermination d'un point TP de transition atteignable par le giravion et permettant au giravion de rejoindre le point TDN de début de descente.

On peut noter qu'une cible, telle qu'un bateau, est considérée comme mobile lorsque sa vitesse de déplacement est égale ou supérieure à une vitesse limite. Cette vitesse limite est par exemple égale à 2 noeuds (2kt). Pour rappel, une vitesse d'un noeud (1kt) correspond à une distance égale à un mille marin ou mille nautique (1NM) parcourue en une heure, à savoir une vitesse de 1852 mètres par heure (1852m/h).

On peut également noter que l'on entend par « route » la direction suivie par le giravion. Cette direction peut être caractérisée par un angle vis-à-vis d'une référence, généralement la direction du Nord, et désigné par le terme « cap ».

Par souci de simplification, on utilisera par la suite l'expression « point MRK de mise en vol stationnaire relatif » pour désigner le point MRK de mise en vol stationnaire relatif du giravion vis-à-vis de la cible.

La phase préliminaire d'établissement de la trajectoire initiale et la phase d'établissement de la trajectoire requise appliquent les mêmes algorithmes et déroulent les mêmes étapes pour déterminer respectivement la trajectoire initiale et la trajectoire requise.

Tout d'abord, une étape de mesure des caractéristiques de la cible, du giravion et du vent subi par le giravion est réalisée.

Le dispositif d'acquisition permet de réaliser la première acquisition de la première position, de la première vitesse et de la première route. Ce dispositif d'acquisition peut être un récepteur désigné par l'acronyme « AIS » signifiant en langue anglaise « Automatic Identification System ». Un récepteur AIS reçoit des informations d'identification, de position, de vitesse et de route émises par des émetteurs AIS installés sur certains navires. Un tel système d'identification automatique est notamment obligatoire pour les bateaux à partir d'un certain tonnage. Les bateaux détectés par le récepteur AIS du giravion sont affichés sur un dispositif de visualisation du giravion pouvant également afficher une carte de la zone.

Ce dispositif d'acquisition peut aussi être un récepteur de signaux de détresse émis par des balises de détresse. Un tel récepteur de signaux de détresse reçoit des informations d'identification, de position, de vitesse et de route émises par des balises de détresse déclenchées par des bateaux en difficulté. Ce récepteur de signaux de détresse est par exemple un récepteur « SATCOM » lié à une famille de satellites de télécommunication en orbite géostationnaire. Les signaux de détresse détectés par le récepteur de signaux de détresse du giravion peuvent également être affichés sur un dispositif de visualisation du giravion.

Ce dispositif d'acquisition peut également être un radar détectant les bateaux proches du giravion ainsi que leurs positions, leurs vitesses et leurs routes et les affichant sous forme d'un point dit également « écho radar » sur un dispositif de visualisation.

Avec de tels dispositifs d'acquisition, la sélection de la cible recherchée peut alors être faite par une saisie manuelle de son identification ou bien directement sur le dispositif de visualisation. Une sélection directe peut être faite sur un dispositif de visualisation tactile ou bien grâce à un index affiché sur le dispositif de visualisation et déplaçable par l'intermédiaire d'un joystick ou bien de tout autre moyen de sélection. Ces dispositifs d'acquisition permettent ainsi une facilité d'identification et d'acquisition de la cible ainsi que des capacités de suivi des déplacements de la cible sélectionnée.

Cette première acquisition de la première position, de la première vitesse et de la première route peut également être réalisée manuellement par l'équipage du giravion directement sur un calculateur présent dans le giravion, par exemple un calculateur de navigation, utilisé comme dispositif d'acquisition.

Le dispositif de localisation permet de réaliser la deuxième acquisition de la deuxième position, de la deuxième vitesse et de la deuxième route. Ce dispositif de localisation comporte par exemple un récepteur d'un système de localisation par satellites désigné par l'acronyme GNSS signifiant en langue anglaise « Global Navigation Satellite System ». Le dispositif de localisation peut également comporter un radioaltimètre fournissant une hauteur courante du giravion par rapport au sol ou bien par rapport à la masse d'eau situé(e) sous le giravion.

Le dispositif de mesure des conditions de vent à proximité du giravion permet de réaliser la troisième acquisition de la troisième vitesse et de la direction du vent subi par le giravion. Ce dispositif de mesure utilise en général la mesure de la vitesse de l'air fournie par un anémomètre installé sur le giravion. Cet anémomètre peut être un anémomètre à tube Pitot utilisé classiquement en aéronautique ou bien un anémomètre à ultrasons ou encore un anémomètre à mesures laser. Cette troisième vitesse et cette direction du vent peuvent être mesurées directement à partir d'une vitesse du vent latéral et d'une vitesse du vent longitudinal selon les directions longitudinale et latérale du giravion. Cette troisième vitesse peut également être décomposée après la troisième acquisition, grâce à la direction du vent, pour déterminer la vitesse du vent latéral et la vitesse du vent longitudinal subi par le giravion. La vitesse du vent longitudinal permet de définir la vitesse du vent arrière subi par le giravion.

Ces acquisitions sont de préférence réalisées simultanément, mais peuvent toutefois être réalisées de façon séquentielle.

Le dispositif d'acquisition, le dispositif de localisation et le dispositif de mesure sont reliés au système de gestion de vol FMS du giravion et peuvent ainsi lui transmettre de façon continue ou bien à intervalles de temps prédéterminées les caractéristiques de la cible sélectionnée, du giravion et du vent subi par le giravion.

Le système de gestion de vol FMS peut ensuite établir les caractéristiques de la trajectoire d'approche et de mise en vol stationnaire relatif du giravion vis-à-vis de la cible sélectionnée. L'étape d'établissement des caractéristiques de la trajectoire d'approche et de mise en vol stationnaire relatif du giravion vis-à-vis de la cible est réalisée par l'intermédiaire d'un calculateur du système de gestion de vol FMS et d'algorithmes stockés dans une mémoire de ce système de gestion de vol FMS.

Tout d'abord, la première détermination d'une trajectoire prédite de la cible peut être réalisée. Cette trajectoire prédite est définie par les caractéristiques connues de la cible mobile, à savoir la première position, la première vitesse et la première route. Dès lors, la trajectoire prédite est définie à partir de la première position, selon la première route en considérant que la première vitesse est constante.

Ensuite, la deuxième détermination d'un axe de descente du giravion vers la cible est réalisée. Cet axe de descente est défini au plus près de la première route, en prenant en compte la troisième vitesse et la direction du vent subi par le giravion ainsi que des limitations de fonctionnement du giravion par rapport aux conditions de vent.

En effet, l'axe de descente privilégié est situé dans le sillage de la cible et est égal à la première route de la cible, à savoir qu'il est situé dans un plan vertical passant par la première route. Cependant, les conditions de vent et les limitations de fonctionnement du giravion ne le permettent pas toujours. En particulier, lorsqu'il est soumis à un vent latéral ou bien à un vent arrière important, un giravion ne peut pas atteindre des vitesses d'avancement trop faibles afin d'éviter que sa vitesse par rapport à l'air soit trop faible et provoque une baisse de la portance de son rotor principal et, par suite, éventuellement un crash du giravion. Ces limitations de fonctionnement du giravion sont connues par le système de gestion de vol FMS.

En conséquence, afin que le giravion reste dans un domaine de vol sécuritaire, l'axe de descente peut former un angle avec la première route afin que les conditions de vent subi par le giravion soient compatibles avec ses limitations de fonctionnement. Cet angle est défini dans un plan horizontal en fonction des conditions de vent subi par le giravion et des limitations de fonctionnement du giravion et du vent qu'il subit.

De la sorte, l'axe de descente du giravion vers la cible mobile est défini dans le sillage de la cible lorsque les vitesses du vent latéral et arrière subi par le giravion sont inférieures à des seuils de vent latéral et arrière fixés. Lorsque la vitesse de vent latéral ou bien la vitesse de vent arrière est supérieure ou égale au seuil de vent latéral ou arrière respectif, la descente du giravion selon un axe de descente égal à la première route n'est pas possible. L'axe de descente est alors modifié et défini de sorte que la vitesse de vent latéral et la vitesse de vent arrière subies par le giravion ne dépassent pas les seuils de vent latéral et arrière respectifs durant la descente du giravion. De fait, le giravion est orienté un peu plus face au vent. Ces seuils de vent arrière et latéral intègrent une marge pour la prise en compte d'éventuelles rafales de vent.

Les seuils de vent latéral et arrière sont déterminés en fonction des limitations de fonctionnement du giravion. Ces seuils de vent latéral et arrière sont par exemple respectivement égaux à 20kt et 5kt.

La troisième détermination d'un point MRK de mise en vol stationnaire relatif du giravion vis-à-vis de la cible et d'une position PTP prédite d'interception de la cible par le giravion est alors réalisée. Le point MRK et la position PTP sont situés sur l'axe de descente.

En outre, le point MRK de mise en vol stationnaire relatif est déterminé afin d'être situé à une distance de sécurité de la position PTP prédite d'interception.

La distance de sécurité peut être une valeur prédéterminée constante. De préférence, la distance de sécurité est égale à la somme d'une distance intermédiaire constante et d'une marge de sécurité variable.

La marge de sécurité est par exemple variable en fonction de la première vitesse. La marge de sécurité est typiquement fournie par un tableau de correspondance selon la première vitesse. Par exemple, la marge de sécurité est égale à 0.1 NM pour une cible ayant une vitesse de 10kt et 0.2NM pour une cible ayant une vitesse de 20kt, la distance intermédiaire étant égale à 0.1 NM. De la sorte, la distance de sécurité s'adapte à la première vitesse et peut varie dans le même sens que la première vitesse, la distance de sécurité augmentant quand la première vitesse augmente.

La marge de sécurité peut également être variable en fonction d'une intégrité de la deuxième position. Cette intégrité est fournie par le dispositif de localisation et est matérialisé par le rayon d'un cercle centré sur la deuxième position et contenant la position vraie du giravion. Ce rayon varie avec la probabilité recherchée d'avoir la vraie position du giravion. En effet, plus le rayon est petit, meilleure est l'intégrité de position puisque la zone d'incertitude concernant la position vraie est réduite.

La marge de sécurité est par exemple égale à la valeur maximale parmi cette intégrité et une valeur prédéterminée correspondant à la première vitesse.

De plus, le point MRK de mise en vol stationnaire relatif peut être déterminé afin qu'il soit situé à une hauteur de vol stationnaire égale à la somme d'une hauteur connue de la cible et d'une marge de hauteur. Cette hauteur connue de la cible est par exemple fournie par le dispositif d'acquisition. La marge de hauteur est par exemple une valeur prédéterminée, typiquement égale à 50 pieds (50ft), un pied étant égal à 0.3048m.

Cette hauteur de vol stationnaire peut aussi être définie comme étant égale à une valeur constante prédéterminée par exemple égale à 100ft. Cette hauteur de vol stationnaire peut enfin être définie comme étant la valeur maximale entre une valeur constante prédéterminée et la hauteur connue de la cible à laquelle est ajoutée la marge de hauteur.

La quatrième détermination d'un point TDN de début de descente pour le giravion vers la cible est ensuite réalisée. Le point TDN de début de descente est défini à partir du point MRK de mise en vol stationnaire relatif et est situé dans un plan vertical contenant l'axe de descente et passant par ce point MRK.

Enfin, la cinquième détermination d'un point TP de transition est réalisée à partir du point TDN de début de descente. Ce point TP de transition, désigné également « turning point » en langue anglaise est défini en fonction des capacités de virage du giravion et afin de permettre au giravion de rejoindre le point TDN de début de descente et, de la sorte, de s'aligner sur l'axe de descente.

Ces troisième, quatrième et cinquième déterminations sont par exemple réalisées par itérations en faisant varier le point MRK de mise en vol stationnaire relatif depuis un point initialement calculé à partir de la première position jusqu'à un point MRK situé dans l'axe de descente et donnant une solution de rendez-vous compatible avec les capacités de vol du giravion. Cette solution correspond par exemple à un temps de vol T_{MRK} entre la position courante du giravion, à savoir la deuxième position, et le point MRK le plus faible possible afin de permettre la réalisation de l'intervention de secours dans le délai le plus court.

Plus précisément, ces troisième, quatrième et cinquième déterminations peuvent se décomposer comme suit :
- on définit une première position PTP₁ prédite d'interception égale à la première position de la cible,
- on calcule à partir de cette première position PTP₁ prédite d'interception l'axe de descente et le point MRK de mise en vol stationnaire relatif,
- on calcule le point TDN de début de descente,
- on calcule le point TP de transition permettant ainsi de définir une trajectoire d'approche complète jusqu'à cette première position PTP1 prédite d'interception,
- pour cette trajectoire d'approche, connaissant notamment la longueur de chaque branche entre les points caractéristiques de cette trajectoire d'approche et en considérant la deuxième vitesse du giravion pour voler de la deuxième position, à savoir la position courante du giravion, jusqu'au point TDN et une décélération connue du giravion entre les points TDN et MRK, on calcule un temps de vol T_{MRK} nécessaire pour voler de la deuxième position jusqu'au point MRK,
- à partir de la première position de la cible, on calcule une seconde position PTP₂ prédite d'interception en considérant que la cible se déplace à la première vitesse, selon la première route pendant le temps de vol T_{MRK},
- on calcule une distance intermédiaire entre la première position PTP₁ prédite d'interception et la seconde position PTP₂ prédite d'interception
- si cette distance intermédiaire est inférieure ou égale à un seuil de distance, alors la trajectoire d'approche est figée avec ses points caractéristiques déterminés, à savoir le point MRK de mise en vol stationnaire relatif, le point TDN de début de descente, le point TP de transition ainsi que la position PTP prédite d'interception égale à la première position PTP₁ prédite d'interception et
- si cette distance intermédiaire est supérieure à ce seuil de distance, on réitère opérations en considérant la première position PTP₁ prédite d'interception égale à cette seconde position PTP₂ prédite d'interception.

Le seuil de distance est par exemple égal à 0.01 mille nautique.

L'étape de mesure des caractéristiques de la cible, du giravion et du vent subi par le giravion, comprenant les première, deuxième et troisième acquisitions, ainsi que l'étape d'établissement des caractéristiques de la trajectoire d'approche et de mise en vol stationnaire relatif du giravion vis-à-vis de la cible sélectionnée sont tout d'abord réalisées pour déterminer une trajectoire initiale d'approche et de mise en vol stationnaire relatif du giravion vis-à-vis de la cible sélectionnée. Cette phase préliminaire d'établissement d'une trajectoire initiale est réalisée au moment du déclenchement de l'intervention de secours ou bien au moment du décollage du giravion. Cette trajectoire initiale est alors définie comme une trajectoire active que doit suivre le giravion pour atteindre la cible et réaliser la mise en vol stationnaire relatif du giravion vis-à-vis de la cible.

L'étape de mesure des caractéristiques de la cible, du giravion et du vent ainsi que l'étape d'établissement des caractéristiques de la trajectoire d'approche et de mise en vol stationnaire relatif du giravion vis-à-vis de la cible sont également réalisées à intervalles réguliers au cours du vol du giravion vers la cible sélectionnée pour déterminer en temps réel une trajectoire requise d'approche et de mise en vol stationnaire relatif du giravion vis-à-vis de la cible en fonction d'éventuelles variations des caractéristiques de la cible, du giravion et du vent.

Enfin, une phase de mise à jour de la trajectoire active par la trajectoire requise est réalisée en fonction des différences entre la trajectoire active et la trajectoire requise si nécessaire afin de garantir en particulier la rapidité et la sécurité de l'intervention.

La trajectoire active est mise à jour par la trajectoire requise afin de modifier l'axe de descente et/ou la trajectoire prédite de la cible ainsi que la position PTP prédite d'interception par le giravion de la cible, et le point MRK de mise en vol stationnaire relatif, le point TP de transition et le point TDN de début de descente.

En effet, la prise en compte de variations des caractéristiques de la cible recherchée, à savoir sa première position, sa première vitesse et sa première route, permet de garantir que le giravion se dirige effectivement vers la cible recherchée, tout changement de route ou bien de vitesse de cette cible ayant été pris en compte. Dès lors, un survol préalable de la cible avant la mise en vol stationnaire relatif du giravion n'est pas nécessaire pour s'assurer qu'il s'agit bien de la cible recherchée.

Un changement de la première vitesse entraîne une modification du point MRK de mise en vol stationnaire relatif et de la position PTP prédite d'interception, puis une modification du point TDN de début de descente et du point TP de transition.

Notamment, suite à une diminution de la première vitesse, le point MRK de mise en vol stationnaire relatif est décalé le long de l'axe de descente afin de respecter la distance de sécurité. Une alerte peut éventuellement être fournie à l'équipage du giravion pour lui signifier ce décalage du point MRK.

Un changement de la première route de la cible peut entraîner une modification de l'axe de descente et par la suite une modification du point MRK de mise en vol stationnaire relatif et de la position PTP prédite d'interception, puis une modification du point TDN de début de descente et du point TP de transition.

En outre, la prise en compte de variations des conditions de vent, à savoir la troisième vitesse et la direction du vent subi par le giravion, permet de s'assurer que la trajectoire active, et en particulier l'axe de descente, est compatible avec les limitations de fonctionnement du giravion. De plus, ces conditions de vent sont mesurées à proximité du giravion, mais elles peuvent être différentes autour de la cible. Avantageusement, la prise en compte de variations des conditions de vent à proximité du giravion et donc lorsque le giravion se rapproche de la cible permet de garantir la prise en compte dans la trajectoire requise des conditions de vent présentes autour de la cible au fur et à mesure que le giravion se rapproche de la cible.

Cette prise en compte de ces variations des conditions de vent lors de l'approche de la cible permet d'anticiper tout changement de vent et d'améliorer ainsi la sécurité encadrant cette intervention de secours et de garantir de la sorte des minimas de sécurité acceptable durant la phase d'approche et de mise en vol stationnaire relatif, en particulier le respect d'une distance de sécurité entre le giravion, lorsqu'il atteint le point MRK de mise en vol stationnaire relatif, et la cible.

De plus, la prise en compte de variations des caractéristiques du giravion, à savoir sa deuxième position, sa deuxième vitesse et sa deuxième route, permet de corriger une éventuelle dérive dans la progression du giravion par rapport à la trajectoire active. Ces variations des caractéristiques du giravion sont obtenues par l'intermédiaire du dispositif de localisation qui transmet en temps réel et de façon automatique les caractéristiques courantes du giravion au système de gestion de vol FMS.

La phase d'établissement d'une trajectoire requise est réalisée à intervalles de temps prédéterminés afin de garantir la prise en compte de toutes les évolutions dans la progression de la cible et/ou du giravion ainsi que les variations des conditions de vent. La phase de mise à jour de la trajectoire active par la trajectoire requise est également réalisée, si nécessaire, à intervalles de temps prédéterminées et de préférence identiques aux intervalles de temps de la phase d'établissement d'une trajectoire requise.

Par exemple, un intervalle de temps prédéterminé est égal à 10 secondes ou bien une minute. La phase d'établissement d'une trajectoire requise et la phase de mise à jour de la trajectoire active par la trajectoire requise peuvent typiquement être réalisée à chaque minute jusqu'à ce que le giravion atteigne le point TP de transition et toutes les 10 secondes ensuite.

De la sorte, le procédé selon l'invention permet de réduire la charge de travail de l'équipage en déterminant la trajectoire d'approche et de mise en vol stationnaire relatif du giravion vis-à-vis de la cible mobile recherchée et en mettant à jour cette trajectoire, si besoin, en fonction des variations des caractéristiques de la cible, du giravion et du vent.

De plus, le procédé selon l'invention permet avantageusement de réduire et d'optimiser le temps nécessaire au giravion pour atteindre la cible recherchée en anticipant en particulier les changements dans la progression de la cible recherchée et dans les conditions de vent. Par la suite, les chances de succès de l'intervention sont augmentées. En outre, l'intervention est également réalisée de façon plus sécuritaire.

Par ailleurs, le procédé selon l'invention permet également à l'équipage du giravion de modifier et d'ajuster manuellement le point MRK de mise en vol stationnaire relatif de la trajectoire active, notamment lorsque le giravion est situé à proximité de ce point MRK ou bien une fois ce point MRK atteint par le giravion. Cette possibilité permet, notamment lorsque la cible est un navire de fort de tonnage, de positionner le point MRK à proximité d'un point particulier du navire, par exemple au plus près d'une zone avant de ce navire où doit être exécutée l'intervention de secours.

Cependant des restrictions à une mise à jour automatique de la trajectoire active par la trajectoire requise peuvent être mise en place dans le cadre du procédé selon l'invention.

Par exemple, une plage angulaire peut être définie dans un plan horizontal autour de l'axe de descente initial défini par la trajectoire initiale. Cette plage angulaire est par exemple définie préalablement à l'intervention de secours ou bien lors de l'établissement de la trajectoire initiale.

Dans ce cadre, l'axe de descente de la trajectoire active est mis à jour automatiquement par un axe de descente requis défini par la trajectoire requise si cet axe de descente requis est compris dans cette plage angulaire autour de l'axe de descente initial.

Dans le cas contraire, à savoir lorsque l'axe de descente requis est situé en dehors de la plage angulaire prédéterminée autour de l'axe de descente initial et définie dans un plan horizontal, l'axe de descente de la trajectoire active n'est pas mis à jour automatiquement par l'axe de descente requis, mais uniquement suite à une action de validation d'un équipage du giravion. Une telle action de validation est par exemple un appui sur un bouton poussoir ou la sélection d'une icône sur un écran. Une alerte sonore et/ou visuelle peut être déclenchée pour informer l'équipage du giravion que l'axe de descente requis est en dehors de cette plage angulaire et que la mise à jour de la trajectoire active doit être validée. La plage angulaire couvre par exemple un angle égal à 20° réparti de façon égale autour de l'axe de descente initial.

En outre, lorsque le giravion est situé à proximité d'un des points caractéristiques de la trajectoire active, cette trajectoire active peut être gelée pour éviter une mise à jour continuelle de la trajectoire active et permettre la réalisation rapide de l'intervention. On peut en effet considérer que lorsque le giravion est situé à proximité d'un point caractéristique de la trajectoire active, les conditions de vent ne devraient que peu varier et qu'en conséquence, l'axe de descente peut donc être figé. Seules la vitesse et la route de la cible peuvent éventuellement évoluer de façon significative. Ce point caractéristique de la trajectoire active est de préférence le point TP de transition

On entend par « geler » la trajectoire active maintenir les caractéristiques de cette trajectoire active constantes. Ces caractéristiques de la trajectoire active ne sont donc plus mises à jour automatiquement avec les caractéristiques de la trajectoire requise.

On considère que le giravion est situé à proximité d'un point caractéristique de la trajectoire active lorsque le giravion est situé à une distance égale ou inférieure à un seuil de proximité de ce point. Ce seuil de proximité peut être une distance définie préalablement. Ce seuil de proximité peut également être égal à une distance parcourue par le giravion à la deuxième vitesse pendant une durée prédéfinie. Ce cas permet avantageusement de prendre en compte la deuxième vitesse dans la détermination de ce seuil de proximité. Cette durée prédéfinie est par exemple égale à une minute.

Cependant, des exceptions au gel de ces caractéristiques de la trajectoire active peuvent être prises en compte par le procédé selon l'invention pour des raisons de sécurité. Ces exceptions concernent en particulier le respect de la distance de sécurité entre le point MRK de mise en vol stationnaire relatif et la position PTP prédite d'interception, suite à une évolution de la vitesse et/ou de la route de la cible.

Par exemple, si la distance entre le point MRK de mise en vol stationnaire relatif de la trajectoire active, donc figé, et la position PTP prédite d'interception de la trajectoire requise est inférieure à la distance de sécurité, le point MRK de la trajectoire active est mis à jour avec le point MRK de la trajectoire requise afin de respecter la distance de sécurité.

Selon un autre exemple, la distance de sécurité étant égale à la somme d'une distance intermédiaire constante et d'une marge de sécurité variable, tant que la distance entre le point MRK de la trajectoire active et la position PTP prédite d'interception de la trajectoire requise est comprise entre la distance de sécurité et la distance intermédiaire constante, le point MRK reste gelé et n'est pas mise à jour, la marge de sécurité étant consommée partiellement ou totalement, la distance intermédiaire constante étant utilisée pour garantir la sécurité de l'intervention de secours.

Par contre, si la distance entre le point MRK de mise en vol stationnaire relatif de la trajectoire active et la position PTP prédite d'interception de la trajectoire requise est inférieure à la distance intermédiaire constante, le point MRK de la trajectoire active peut être mis à jour automatiquement avec le point MRK de la trajectoire requise afin de respecter une nouvelle distance de sécurité égale à la distance intermédiaire constante.

Toutefois, dans ces deux cas, une alerte peut être fournie à l'équipage dès que la distance de sécurité n'est plus respectée. La mise à jour du point MRK de la trajectoire active par celui de la trajectoire requise peut également être effectuée suite à une action de validation de l'équipage du giravion.

L'équipage du giravion peut également ajuster manuellement le point MRK de mise en vol stationnaire relatif pour l'éloigner de la position PTP prédite d'interception après émission de l'alerte.

Le procédé d'établissement d'une trajectoire d'approche d'une cible mobile selon l'invention peut également comporter une phase d'affichage sur un dispositif de visualisation d'au moins certaines caractéristiques de la trajectoire active.

Par exemple, la première position, qui est la position courante de la cible, la position PTP prédite de la cible, la deuxième position, qui est la position courante du giravion, le point TP de transition, le point TDN de début de descente et le point MRK de mise en vol stationnaire relatif sont affichés. L'équipage du giravion, et en particulier le pilote, peut ainsi visualiser la progression de la cible et la position PTP d'interception prédite ainsi que les points TP de transition, TDN de début de descente et MRK de mise en vol stationnaire relatif.

Toutefois, afin de limiter la quantité d'information affichée, la position PTP prédite de la cible et le point MRK de mise en vol stationnaire relatif peuvent être affichés uniquement lorsque le giravion est situé à une distance d'affichage d'un des points caractéristiques de cette trajectoire active ou bien atteint un de ces points caractéristiques. Les autres points caractéristiques de la trajectoire active peuvent être affichés dès le début de l'intervention de secours.

Par exemple, la distance d'affichage correspond à une distance parcourue par le giravion pendant une durée de trois minutes. L'affichage de la position PTP prédite de la cible et du point MRK de mise en vol stationnaire relatif peut ainsi être faite dès que le giravion atteint le point TDN de début de descente ou bien se trouve à trois minutes d'atteindre le point MRK de mise en vol stationnaire relatif.

Le pilote peut ainsi piloter le giravion selon la trajectoire active en respectant ces points de passage jusqu'au vol stationnaire relatif du giravion vis-à-vis de la cible au point MRK.

Le giravion peut aussi comporter un pilote automatique. Ce pilote automatique est lié au système de gestion de vol FMS et permet ainsi au giravion de suivre, de façon automatique, la trajectoire active précédemment définie jusqu'au point MRK.

Cette trajectoire active se compose alors d'une trajectoire d'approche jusqu'au point TP de transition, d'une trajectoire de ralliement jusqu'au point TDN de début de descente, d'une trajectoire de descente jusqu'au point MRK de mise en vol stationnaire relatif et d'un vol stationnaire relatif du giravion vis-à-vis de la cible au point MRK de mise en vol stationnaire relatif. Le pilote automatique permet également de gérer les décélérations du giravion et en particulier d'adapter la deuxième vitesse du giravion à la première vitesse de la cible lorsque le giravion a atteint le point MRK. Dans ce but, le système de gestion de vol FMS communique avec le pilote automatique afin d'une part de lui fournir des consignes de vol et d'autre part de contrôler et de corriger la progression du giravion vis-à-vis de ces consignes.

La trajectoire d'approche entre la position courante du giravion et le point TP de transition est par exemple une trajectoire sensiblement rectiligne de type « direct to ». La trajectoire de ralliement entre le point TP de transition et le point TDN de début de descente permet l'alignement du giravion sur l'axe de descente. La trajectoire de descente jusqu'au point MRK de mise en vol stationnaire relatif permet d'atteindre ce point MRK de mise en vol stationnaire relatif avec une deuxième vitesse et une deuxième route égales à la première vitesse et la première route.

La trajectoire d'approche est de préférence réalisée essentiellement à la vitesse maximale du giravion afin que l'intervention de secours soit réalisée le plus rapidement possible. La trajectoire d'approche peut également être réalisée essentiellement à une vitesse permettant la plus grande autonomie du giravion.

Une première décélération du giravion peut avoir lieu avant le point TP de transition si nécessaire afin que la deuxième vitesse soit compatible avec la trajectoire de ralliement entre le point TP de transition et le point TDN de début de descente.

Ensuite, une seconde décélération du giravion est réalisée sur la trajectoire descente pour que le giravion atteigne le point MRK de mise en vol stationnaire relatif avec une deuxième vitesse égale à la première vitesse de la cible.

De la sorte, la présente invention a aussi pour objet un procédé d'aide à une approche d'un giravion sur une cible mobile et à une mise en vol stationnaire relatif du giravion vis-à-vis de la cible au cours duquel la trajectoire active établie par le procédé d'établissement d'une trajectoire d'approche d'un giravion sur une cible mobile et de mise en vol stationnaire relatif précédemment décrit est suivie automatiquement par le giravion.

La présente invention a également pour objet un système d'établissement d'une trajectoire d'approche d'un giravion sur une cible mobile et de mise en vol stationnaire relatif du giravion vis-à-vis de la cible. Ce système permet de mettre en oeuvre le procédé précédemment décrit. Dans ce but, ce système comporte :
- un système de gestion de vol FMS muni d'au moins un calculateur et au moins une mémoire,
- un dispositif d'acquisition d'une première position, d'une première vitesse et d'une première route de la cible mobile,
- un dispositif de localisation du giravion permettant de fournir une deuxième position, une deuxième vitesse et deuxième une route du giravion, et
- un dispositif de mesure des conditions de vent à proximité giravion, à savoir une troisième vitesse et une direction du vent subi par le giravion.

Le système d'établissement d'une trajectoire d'approche d'une cible mobile peut également comporter un dispositif de visualisation ou bien utiliser un dispositif de visualisation du giravion. De plus, ce système peut communiquer avec un pilote automatique du giravion par l'intermédiaire du système de gestion de vol FMS.

L'invention et ses avantages apparaîtront avec plus de détails dans le cadre de la description qui suit avec des exemples de réalisation donnés à titre illustratif en référence aux figures annexées qui représentent :
- la figure 1, un giravion équipé d'un système d'établissement d'une trajectoire d'approche et de mise en vol stationnaire relatif du giravion vis-à-vis de la cible mobile,
- la figure 2, un schéma synoptique d'un procédé d'établissement d'une trajectoire d'approche et de mise en vol stationnaire relatif du giravion vis-à-vis de la cible mobile,
- la figure 3, un schéma synoptique d'une détermination d'un axe de descente du giravion vers la cible,
- la figure 4, une vue d'un affichage de ce système d'établissement d'une trajectoire d'approche de la cible mobile,
- la figure 5, un schéma représentant différentes trajectoires d'approche de la cible selon le vent subi par le giravion, et
- les figures 6 et 7, deux profils verticaux de trajectoires d'approche de la cible.

Les éléments présents dans plusieurs figures distinctes sont affectés d'une seule et même référence.

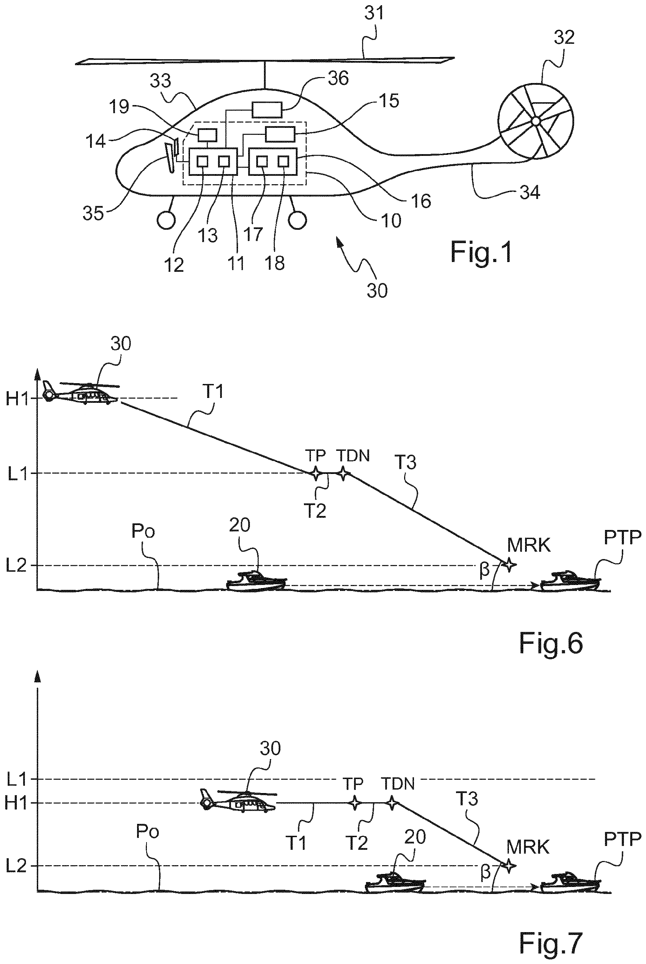

Sur la figure 1, est représenté un giravion 30 comprenant un rotor principal 31 positionné au-dessus d'un fuselage 33 et un rotor arrière anticouple 32 positionné à l'extrémité arrière d'une poutre de queue 34. Le giravion 30 comporte également un pilote automatique 36 et un tableau de bord 35 muni d'au moins un dispositif de visualisation 14, tel un écran. Ce giravion 30 est particulièrement destiné à des missions de recherche et de sauvetage en mer et comporte dans ce but un système 10 d'établissement d'une trajectoire d'approche du giravion 30 sur une cible 20 mobile et de mise en vol stationnaire relatif du giravion 30 vis-à-vis de la cible 20.

Le système 10 comporte un système de gestion de vol 11 muni d'un calculateur 12 et d'une mémoire 13, un dispositif d'acquisition 15 de caractéristiques relatives à une cible 20 recherchée, un dispositif de localisation 16 du giravion 30 et un dispositif de mesure 19 des conditions de vent à proximité du giravion 30. Le dispositif d'acquisition 15, le dispositif de localisation 16 et le dispositif de mesure 19 sont reliés au système de gestion de vol 11.

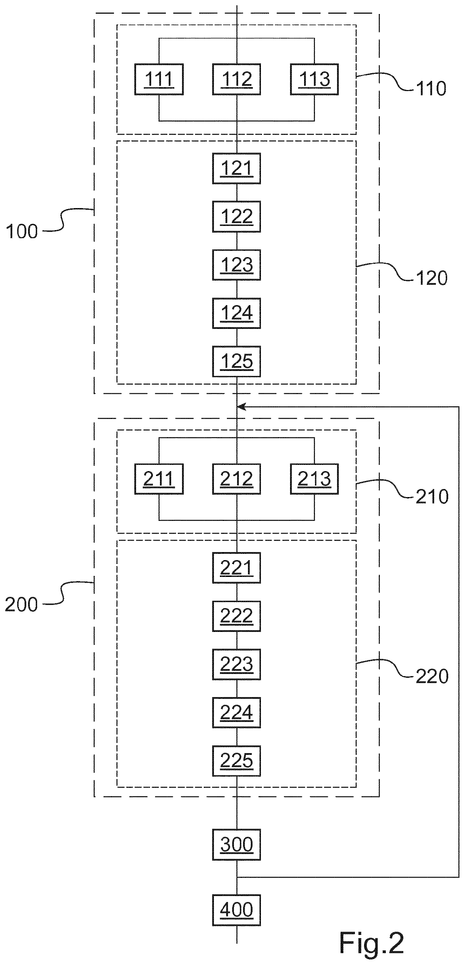

Le système 10 met en oeuvre un procédé d'établissement d'une trajectoire d'approche d'un giravion 30 sur une cible 20 mobile et de mise en vol stationnaire relatif du giravion 30 vis-à-vis de la cible 20 dont un schéma synoptique est représenté sur la figure 2.

Ce procédé comporte notamment une phase préliminaire d'établissement 100 d'une trajectoire initiale d'approche et de mise en vol stationnaire relatif du giravion 30 vis-à-vis de la cible 20, une phase d'établissement 200 d'une trajectoire requise d'approche et de mise en vol stationnaire relatif du giravion 30 vis-à-vis de la cible 20 en fonction d'éventuelles variations des caractéristiques de la cible 20, du giravion 30 et du vent subi par le giravion 30, ainsi qu'une phase de mise à jour 300 de la trajectoire active par la trajectoire requise afin de garantir la sécurité de la trajectoire active.

La trajectoire initiale est définie comme une trajectoire active que doit suivre le giravion 30 pour atteindre la cible 20 au démarrage de l'intervention de secours. Ensuite, au cours du vol du giravion 30 en direction de la cible 20, la phase d'établissement 200 d'une trajectoire requise est réalisée, puis la trajectoire active est mise à jour par la trajectoire requise au cours de la phase de mise à jour 300 de la trajectoire active par la trajectoire requise si besoin en fonction des variations des caractéristiques de la cible 20, du giravion 30 et du vent subi par le giravion 30.

La phase préliminaire d'établissement 100 de la trajectoire initiale et la phase d'établissement 200 de la trajectoire requise comportent les mêmes étapes qui sont réalisées respectivement avant le démarrage de l'intervention et au cours du vol du giravion 30 en direction de la cible 20.

Tout d'abord, une étape de mesure 110,210 des caractéristiques de la cible 20, du giravion 30 et du vent subi par le giravion 30 pendant laquelle le système 10 acquiert des données d'entrées transmises au système de gestion de vol 11.

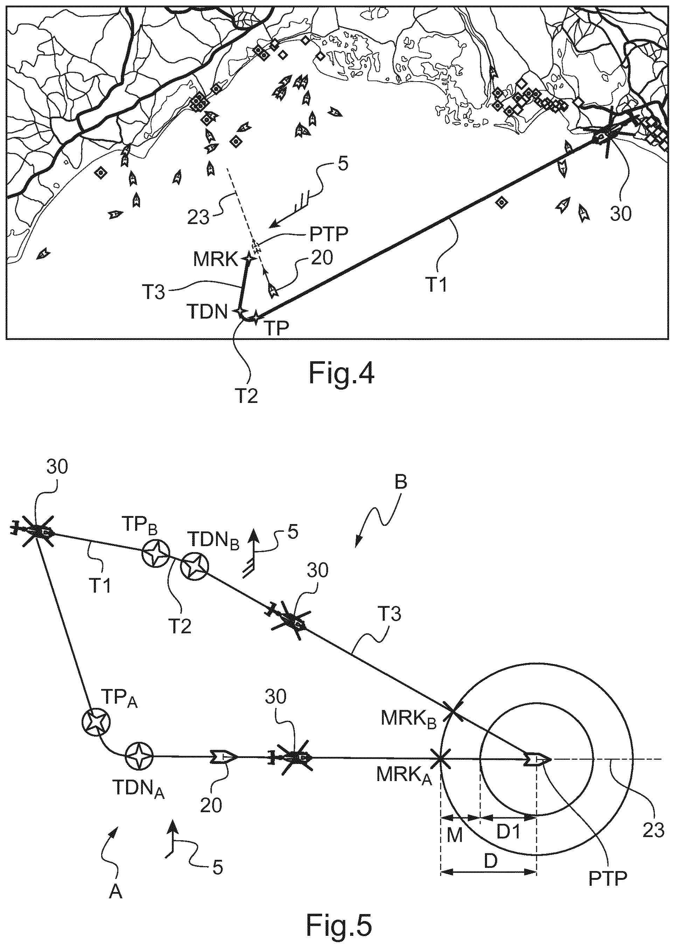

Le dispositif d'acquisition 15 est un récepteur AIS permettant une identification automatique des bateaux équipés de ce système d'identification automatique AIS et naviguant dans une zone entourant le giravion 30 ainsi que la réception de caractéristiques les concernant, à savoir leurs positions, leurs vitesses et leurs routes. Ce récepteur AIS est relié à l'écran 14. Cet écran 14 peut alors afficher les bateaux détectés dans l'environnement du giravion 30 avec le profil de la côte comme représenté sur la figure 4. Une cible 20 à laquelle le giravion 30 doit porter secours peut alors être sélectionnée directement sur l'écran 14, si celui-ci est tactile, ou bien par l'intermédiaire d'un joystick. Le dispositif d'acquisition 15 fournit alors au système de gestion de vol 11 lors d'une première acquisition 111,211 une première position, une première vitesse et une première route de la cible 20 sélectionnée.

Le dispositif de localisation 16 comporte un récepteur GNSS 17 d'un système de localisation par satellites fournissant au système de gestion de vol 11, lors d'une deuxième acquisition 112,212, une deuxième position, une deuxième vitesse et une deuxième route du giravion 30 et un radioaltimètre 18 fournissant une hauteur courante du giravion 30 par rapport au sol ou bien à la masse d'eau situé(e) sous le giravion 30.

De plus, le dispositif de mesure 19 des conditions de vent à proximité du giravion 30 est un anémomètre permettant de mesurer, lors d'une troisième acquisition 113,213, une troisième vitesse et une direction du vent subi par le giravion 30 et de les fournir au système de gestion de vol 11.

Une phase d'établissement 120,220 de caractéristiques d'une trajectoire d'approche et de mise en vol stationnaire relatif du giravion 30 vis-à-vis de la cible 20 est ensuite réalisée par le système 10, et en particulier par le calculateur 12 du système de gestion de vol 11 à l'aide d'instructions stockées dans la mémoire 13, par exemple sous forme d'algorithmes.

Une trajectoire prédite 23 de la cible 20 est tout d'abord déterminée au cours d'une première détermination 121,221. La trajectoire prédite 23 est déterminée à partir de la première position, la première vitesse et la première route.

Ensuite, un axe de descente du giravion 30 vers la cible 20 est déterminé au cours d'une deuxième détermination 122,222. Deux cas de figure pour cet axe de descente sont représentés sur la figure 5 selon la direction et la troisième vitesse du vent subi par le giravion 30. Sur cette figure 5 sont notamment visibles, projetés sur un plan horizontal P₀ formé par le sol ou bien la surface de l'eau survolé(e) par le giravion 30, la trajectoire prédite 23 et une position PTP prédite d'interception de la cible 20 par le giravion 30 ainsi que l'axe de descente, un point TP de transition, un point TDN de début de descente et un point MRK de mise en vol stationnaire relatif selon ces différents cas de figure. Une indication 5 de la direction et de la troisième vitesse du vent est également représentée pour chaque cas de figure.

Suite à la deuxième détermination 122,222 de l'axe de descente, le point MRK de mise en vol stationnaire relatif du giravion 30 vis-à-vis de la cible 20 et d'une position PTP prédite d'interception de la cible 20 par le giravion 30 sont déterminés au cours d'une troisième détermination 123,223. Le point MRK de mise en vol stationnaire relatif et la position PTP prédite d'interception sont situés sur l'axe de descente. Le point MRK est déterminé afin d'être situé d'une part à une distance de sécurité D de la position prédite PTP de la cible 20 selon un plan horizontal ainsi que d'autre part à une hauteur de vol stationnaire L2.

La distance de sécurité D peut être, comme représenté sur la figure 5, égale à la somme d'une distance intermédiaire D1 constante et d'une marge de sécurité M variable. Cette marge de sécurité M est variable selon la première vitesse et/ou une intégrité de la deuxième position.

Ensuite, au cours d'une quatrième détermination 124,224, le point TDN de début de descente pour le giravion 30 vers la cible 20 est défini à partir du point MRK par un angle de descente β et par une hauteur de début de descente par rapport au plan horizontal P₀ comme représenté sur les figures 6 et 7. Le point TDN de début de descente est situé dans un plan vertical contenant l'axe de descente et le point MRK.

L'angle de descente β est de préférence une valeur constante définie préalablement à la mission d'intervention de secours. La hauteur de début de descente peut être par défaut égale à un seuil d'altitude L1 défini préalablement à la mission d'intervention, comme représenté sur la figure 6. Ce seuil d'altitude L1 est par exemple égal à 1000ft.

Toutefois, si le giravion 30 est situé à une hauteur de vol H1 inférieure au seuil d'altitude L1, comme représenté sur la figure 7, le point TDN de début de descente est déterminé afin que la hauteur de début de descente soit égale à la hauteur de vol H1. Le giravion 30 effectue alors un vol en palier jusqu'au point TP de transition.

Enfin, le point TP de transition est défini au cours de la cinquième détermination 125,225 à partir du point TDN de début de descente et en fonction des capacités de virage du giravion. Le point TP de transition est de préférence déterminés afin d'être situés à la même altitude que le point TDN de début de descente, à savoir la hauteur de début de descente.

La deuxième détermination 122,222 de l'axe de descente prend en compte des limitations de fonctionnement du giravion 30 selon le vent latéral ou arrière subi. Ces limitations de fonctionnement du giravion 30 sont connues, en particulier par le système de gestion de vol 11 et caractérisées notamment par un seuil de vent latéral et un seuil de vent arrière par exemple respectivement égaux à 20kt et 5kt. Dès lors, la deuxième détermination 122,222 de l'axe de descente prend en compte ces limitations de fonctionnement du giravion 30 ainsi que la première route de la cible 20, la troisième vitesse et la direction du vent.

Selon un premier cas A représenté sur la figure 5, l'axe de descente est égal à la première route. Le premier point TDN_{A} de début de descente et le premier point MRK_{A} de mise en vol stationnaire relatif sont alors situés sur la trajectoire prédite 23. Ce premier cas A correspond à un faible vent subi par le giravion 30, la troisième vitesse étant inférieure à 20kt, et orienté perpendiculairement à la première route. Le premier point TP_{A} de transition est défini entre la position courante du giravion 30 et le premier point TDN_{A} de début de descente.

Selon un deuxième cas B, l'axe de descente est incliné vis-à-vis de la première route. Le deuxième point TDN_{B} de début de descente et le deuxième point MRK_{B} de mise en vol stationnaire relatif sont définis en dehors de la trajectoire prédite 23. Ce deuxième cas correspond à un vent relativement fort subi par le giravion 30, la troisième vitesse étant par exemple supérieure à 20kt, et orienté perpendiculairement à la première route. Le deuxième point TP_{B} de transition est défini entre la position courante du giravion 30 et le deuxième point TDN_{B} de début de descente. L'angle entre l'axe de descente et la trajectoire prédite 23 est défini en fonction de la troisième vitesse et de la direction du vent de sorte que la vitesse de vent latéral et la vitesse de vent arrière subies par le giravion 30 ne dépassent pas respectivement les seuils de vent latéral et arrière durant la descente du giravion 30.

Le respect de ces seuils de vent latéral et arrière permet de réaliser l'approche de la cible 20 de façon sécuritaire en prenant en compte la première route de la cible 20 ainsi que la troisième vitesse et la direction du vent subi par le giravion 30.

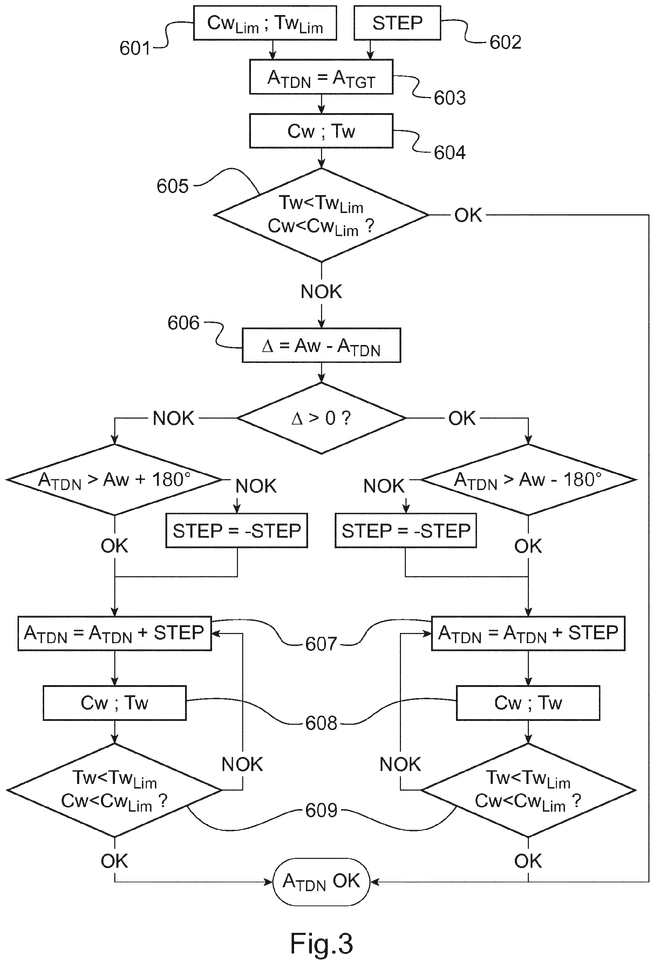

La deuxième détermination 122,222 de l'axe de descente peut également être faite de façon itérative en partant d'un axe de descente égal à la première route et augmentant vers la direction du vent subi par le giravion 30. L'axe de descente est validé dès que le giravion 30 subit un vent latéral avec une vitesse inférieure seuil de vent latéral et un vent arrière avec une vitesse inférieure à seuil de vent arrière. L'axe de descente et la première route sont caractérisés par leur cap respectif. Un schéma synoptique de cette deuxième détermination 122,222 de l'axe de descente de façon itérative est représenté sur la figure 3. Cette deuxième détermination 122,222 comporte les sous-étapes suivantes :
- une détermination 601 d'un seuil de vent latéral Cw_{Lim} et d'un seuil de vent arrière Tw_{Lim} en fonction des limitations de fonctionnement du giravion 30,
- une détermination 602 d'un pas d'itération STEP, par exemple égal à 1°,
- une détermination 603 de l'axe de descente égal à la première route de la cible 20 et situé dans un plan vertical passant par la première route, l'axe de descente étant caractérisé par un cap de descente A_{TDN} et la première route de la cible 20 par un cap de la cible A_{TGT},
- un calcul 604 d'une vitesse du vent latéral Cw et d'une vitesse du vent arrière Tw subies par le giravion 30 si le giravion 30 volait selon l'axe de descente,
- une comparaison 605 de la vitesse du vent latéral Cw avec le seuil de vent latéral Cw_{Lim} et de la vitesse du vent arrière Tw avec le seuil de vent arrière Tw_{Lim},
- si la vitesse du vent latéral Cw est inférieure au seuil de vent latéral Cw_{Lim} et si la vitesse du vent arrière Tw est inférieure au seuil de vent arrière Tw_{Lim}, l'axe de descente est validé,
- si la vitesse du vent latéral Cw n'est pas inférieure au seuil de vent latéral Cw_{Lim} ou bien si la vitesse du vent arrière Tw n'est pas inférieure au seuil de vent arrière Tw_{Lim}, les sous-étapes suivantes sont réalisées :
   - un calcul 606 d'un angle de vent Δ entre une direction Aw du vent subi par le giravion 30 et l'axe de descente,
   - si l'angle de vent Δ est un angle positif et si le cap de descente A_{TDN} est supérieur à un cap formé par la direction Aw du vent subi par le giravion à laquelle est retiré un angle plat de 180°, le signe du pas d'itération STEP est inversé,
   - si l'angle de vent Δ est un angle négatif et si le cap de descente A_{TDN} est supérieur à un cap formé par la direction Aw du vent subi par le giravion à laquelle est ajouté un angle plat de 180°, le signe du pas d'itération est inversé,
   - une itération 607 de l'axe de descente en ajoutant au cap de descente A_{TDN} un pas d'itération STEP,
   - un calcul 608 de la vitesse du vent latéral Cw et de la vitesse du vent arrière Tw subies par le giravion si le giravion volait selon l'axe de descente précédemment défini,
   - une comparaison 609 de la vitesse du vent latéral Cw avec le seuil de vent latéral Cw_{Lim} et de la vitesse du vent arrière Tw avec le seuil de vent arrière Tw_{Lim},
   - si la vitesse du vent latéral Cw est inférieure au seuil de vent latéral Cw_{Lim} et si la vitesse du vent arrière Tw est inférieure au seuil de vent arrière Tw_{Lim}, l'axe de descente est validé,
   - si la vitesse du vent latéral Cw n'est pas inférieure au seuil de vent latéral Cw_{Lim} ou bien si la vitesse du vent arrière Tw n'est pas inférieure au seuil de vent arrière Tw_{Lim}, la deuxième détermination 122,222 reprend à l'itération 607 de l'axe de descente.

L'angle de vent Δ entre la direction Aw du vent subi par le giravion 30 et l'axe de descente est défini dans un plan horizontal. Cet angle de vent Δ est défini plus précisément entre une projection de la direction Aw du vent sur ce plan horizontal et une projection de l'axe de descente sur ce plan horizontal.

Suite à la phase d'établissement 200 de la trajectoire requise, la trajectoire active peut être mise à jour par la trajectoire requise au cours de la phase de mise à jour 300 si besoin en fonction des variations des caractéristiques de la cible 20, du giravion 30 et du vent subi par le giravion 30.

De la sorte, un changement de la première route et/ou de la première vitesse est pris en compte au plus tôt évitant ainsi une perte de temps dans la recherche de la cible 20 et la réalisation de l'intervention de secours. De même, une éventuelle dérive dans la progression du giravion 30 peut également être corrigée et une évolution des conditions de vent peut être prise en compte afin d'optimiser le temps d'intervention du giravion 30 tout en garantissant la sécurité de l'intervention.

La trajectoire active peut alors être réalisée par le giravion 30 et se décompose en :
- une phase d'approche de la cible 20 selon une trajectoire d'approche T1 entre une position courante du giravion 30 et le point TP de transition,
- une phase d'alignement du giravion 30 avec l'axe de descente selon une trajectoire de ralliement T2 entre la position courante du giravion 30 et le point TDN de début de descente,
- une phase de descente vers la cible 20 selon une trajectoire de descente T3 parallèlement à l'axe de descente entre la position courante du giravion 30 et le point MRK de mise en vol stationnaire relatif, et
- une phase de vol stationnaire relatif du giravion 30 vis-à-vis de la cible 20 mobile au point MRK.

Ces différentes phases de la trajectoire active peuvent être réalisées de façon automatique par le pilote automatique 36 du giravion 30. Ces différentes phases de la trajectoire active peuvent également être réalisées manuellement par le pilote du giravion 30 en respectant les points TP de transition, TDN de début de descente et MRK de mise en vol stationnaire relatif ainsi que l'axe de descente jusqu'au vol stationnaire relatif du giravion 30 vis-à-vis de la cible 20.

De plus, le procédé selon l'invention peut comporter une phase d'affichage 400 du point TP de transition, du point TDN de début de descente et du point MRK de mise en vol stationnaire relatif sur le dispositif de visualisation 14, comme représenté sur la figure 4. Les positions courantes de la cible 20 et du giravion 30 ainsi que l'indication 5 de la direction du vent et de la troisième vitesse sont également affichées.

## Revendications

1. Procédé d'établissement d'une trajectoire d'approche d'un giravion (30) sur une cible (20) mobile et de mise en vol stationnaire relatif dudit giravion (30) vis-à-vis de ladite cible (20), ledit giravion (30) étant muni de :
- un système de gestion de vol (11) comportant au moins un calculateur (12) et au moins une mémoire (13),
- un dispositif d'acquisition (15) d'une première position, d'une première vitesse et d'une première route de ladite cible (20) mobile,
- un dispositif de localisation (16) permettant de fournir une deuxième position, une deuxième vitesse et une deuxième route dudit giravion (30), et
- un dispositif de mesure (19) des conditions de vent à proximité dudit giravion (30) permettant de mesurer une troisième vitesse et une direction du vent subi par ledit giravion (30),
**caractérisé en ce que** ledit procédé comporte :
- une phase préliminaire d'établissement (100) d'une trajectoire initiale d'approche et de mise en vol stationnaire relatif dudit giravion (30) vis-à-vis de ladite cible (20), ladite trajectoire initiale étant définie comme une trajectoire active que doit suivre ledit giravion (30) pour atteindre ladite cible (20),
- une phase d'établissement (200) d'une trajectoire requise d'approche et de mise en vol stationnaire relatif dudit giravion (30) vis-à-vis de ladite cible (20) en fonction d'éventuelles variations desdites caractéristiques de ladite cible (20), dudit giravion (30) et dudit vent subi par ledit giravion (30), ladite phase d'établissement (200) d'une trajectoire requise étant réalisée au cours du vol dudit giravion en direction de ladite cible (20), et
- une phase de mise à jour (300) de ladite trajectoire active par ladite trajectoire requise afin de garantir la sécurité de ladite trajectoire active,
ladite phase préliminaire d'établissement (100) de ladite trajectoire initiale et ladite phase d'établissement (200) de ladite trajectoire requise comportant de façon commune des étapes suivantes :
- une étape de mesure (110,210) des caractéristiques de ladite cible (20), dudit giravion (30) et dudit vent subi par ledit giravion (30) munie des sous-étapes suivantes :
• une première acquisition (111,211) de ladite première position, de ladite première vitesse et de ladite première route de ladite cible (20),
• une deuxième acquisition (112,212) de ladite deuxième position, de ladite deuxième vitesse et de ladite deuxième route dudit giravion (30), et
• une troisième acquisition (113,213) de ladite troisième vitesse et de ladite direction dudit vent subi par ledit giravion (30),
- une étape d'établissement (120,220) des caractéristiques de ladite trajectoire d'approche et de mise en vol stationnaire relatif dudit giravion (30) vis-à-vis de ladite cible (20) munie des sous-étapes suivantes :
• une première détermination (121,221) d'une trajectoire prédite (23) de ladite cible (20),
• une deuxième détermination (122,222) d'un axe de descente pour ledit giravion (30) vers ladite cible (20), ledit axe de descente étant défini au plus près de ladite première route de ladite cible (20), en prenant en compte ladite troisième vitesse et ladite direction dudit vent subi par ledit giravion (30) ainsi que des limitations de fonctionnement dudit giravion (30),
• une troisième détermination (123,223) d'un point (MRK) de mise en vol stationnaire relatif dudit giravion (30) vis-à-vis de ladite cible (20) et d'une position (PTP) prédite d'interception de ladite cible (20) par ledit giravion (30), ledit point (MRK) de mise en vol stationnaire relatif et ladite position (PTP) prédite d'interception étant situés sur ledit axe de descente,
• une quatrième détermination (124,224) d'un point (TDN) de début de descente pour ledit giravion (30) vers ladite cible (20), ledit point (TDN) de début de descente étant situé sur ledit axe de descente passant par ledit point (MRK) de mise en vol stationnaire relatif et
• une cinquième détermination (125,225) d'un point (TP) de transition atteignable par ledit giravion (30) et permettant audit giravion (30) de rejoindre ledit point (TDN) de début de descente.

2. Procédé selon la revendication 1,
**caractérisé en ce que** ladite trajectoire d'approche et de mise en vol stationnaire relatif dudit giravion (30) vis-à-vis de ladite cible (20) est définie de sorte qu'une distance de sécurité sépare ledit point (MRK) de mise en vol stationnaire relatif et ladite positon (PTP) prédite d'interception de ladite cible (20), ladite distance de sécurité étant égale à une somme d'une distance intermédiaire constante et d'une marge de sécurité variable en fonction desdites caractéristiques de ladite cible (20), dudit giravion (30) ou bien dudit vent subi par ledit giravion (30).

3. Procédé selon la revendication 2,
**caractérisé en ce que** ladite marge de sécurité est variable en fonction de ladite première vitesse.

4. Procédé selon la revendication 2,
**caractérisé en ce qu'**une intégrité de ladite deuxième position dudit giravion (30) est fournie lors de ladite deuxième acquisition (112,212) et ladite marge de sécurité est égale à ladite intégrité.

5. Procédé selon l'une quelconque des revendications 1 à 4,
**caractérisé en ce qu'**un seuil de vent latéral et un seuil de vent arrière sont déterminés en fonction desdites limitations de fonctionnement dudit giravion (30), puis
- ledit axe de descente est défini égal à ladite première route de ladite cible (20) et dans un plan vertical passant par ladite première route lorsque ladite troisième vitesse dudit vent subi par ledit giravion (30) est inférieure audit seuil de vent latéral et audit seuil de vent arrière, et
- ledit axe de descente est défini au plus près de ladite première route de ladite cible (20) et de telle sorte que ledit giravion (30) subisse un vent latéral inférieur à audit seuil de vent latéral et un vent arrière inférieur à audit seuil de vent arrière lorsque ladite troisième vitesse dudit vent subi par ledit giravion (30) est supérieure ou égale audit seuil de vent arrière et/ou audit seuil de vent latéral.

6. Procédé selon l'une quelconque des revendications 1 à 4,
**caractérisé en ce que** ladite deuxième détermination (122,222) dudit axe de descente comporte les sous-étapes suivantes,
- une détermination (601) d'un seuil de vent latéral Cw_{Lim} et d'un seuil de vent arrière Tw_{Lim} en fonction desdites limitations de fonctionnement dudit giravion (30),
- une détermination (602) d'un pas d'itération STEP,
- une détermination (603) dudit axe de descente égal à ladite première route de ladite cible (20) et situé dans un plan vertical passant par ladite première route, ledit axe de descente étant **caractérisé par** un cap de descente A_{TDN},
- un calcul (604) d'une vitesse du vent latéral Cw et d'une vitesse du vent arrière Tw subies par ledit giravion (30) si ledit giravion (30) volait selon ledit axe de descente,
- une comparaison (605) de ladite vitesse dudit vent latéral Cw avec ledit seuil de vent latéral Cw_{Lim} et de ladite vitesse dudit vent arrière Tw avec ledit seuil de vent arrière Tw_{Lim},
- si ladite vitesse dudit vent latéral Cw est inférieure audit seuil de vent latéral Cw_{Lim} et si ladite vitesse dudit vent arrière Tw est inférieure audit seuil de vent arrière Tw_{Lim}, ledit axe de descente est validé,
- si ladite vitesse dudit vent latéral Cw n'est pas inférieure audit seuil de vent latéral Cw_{Lim} ou bien si ladite vitesse dudit vent arrière Tw n'est pas inférieure audit seuil de vent arrière Tw_{Lim}, les sous-étapes suivantes sont réalisées :
• un calcul (606) d'un angle de vent Δ entre une direction Aw dudit vent subi par ledit giravion (30) et ledit axe de descente,
• si ledit angle de vent Δ est un angle positif et si ledit cap de descente A_{TDN} est supérieur à un cap formé par ladite direction Aw à laquelle est retiré un angle plat de 180°, le signe dudit pas d'itération STEP est inversé,
• si ledit angle de vent Δ est un angle négatif et si ledit cap de descente A_{TDN} est supérieur à un cap formé par ladite direction Aw à laquelle est ajouté un angle plat de 180°, le signe dudit pas d'itération est inversé
• une itération (607) dudit axe de descente en ajoutant audit cap de descente A_{TDN} un pas d'itération STEP,
• un calcul (608) de ladite vitesse dudit vent latéral Cw et de ladite vitesse dudit vent arrière Tw subis par ledit giravion (30) si ledit giravion (30) volait selon ledit axe de descente,
• une comparaison (609) de ladite vitesse dudit vent latéral Cw avec ledit seuil de vent latéral Cw_{Lim} et de ladite vitesse dudit vent arrière Tw avec ledit seuil de vent arrière Tw_{Lim},
• si ladite vitesse dudit vent latéral Cw est inférieure audit seuil de vent latéral Cw_{Lim} et si ladite vitesse dudit vent arrière Tw est inférieure audit seuil de vent arrière Tw_{Lim}, ledit axe de descente est validé,
• si ladite vitesse dudit vent latéral Cw n'est pas inférieure audit seuil de vent latéral Cw_{Lim} ou bien si ladite vitesse dudit vent arrière Tw n'est pas inférieure audit seuil de vent arrière Tw_{Lim}, ladite deuxième détermination (122,222) reprend à ladite itération (607) dudit axe de descente.

7. Procédé selon l'une quelconque des revendications 1 à 6,
**caractérisé en ce que** ledit axe de descente de ladite trajectoire active est mis à jour automatiquement par un axe de descente requis défini par ladite trajectoire requise si ledit axe de descente requis est compris dans une plage angulaire prédéterminée autour d'un axe de descente initial défini par ladite trajectoire initiale.

8. Procédé selon la revendication 7,
**caractérisé en ce que** ledit axe de descente de ladite trajectoire active est mise à jour par ledit axe de descente requis suite à une action d'un équipage dudit giravion (30) si ledit axe de descente requis est situé en dehors de ladite plage angulaire prédéterminée autour dudit axe de descente initial.

9. Procédé selon l'une quelconque des revendications 1 à 8,
**caractérisé en ce que** lesdites troisième détermination (123,223), quatrième détermination (124,224) et cinquième détermination (125,225) se décomposent comme suit :
- on définit une première position (PTP₁) prédite d'interception égale à ladite première position de ladite cible (20),
- on calcule à partir de ladite première position (PTP₁) prédite d'interception ledit axe de descente, ledit point (MRK) de mise en vol stationnaire relatif et ledit point (TDN) de début de descente,
- on calcule ledit point (TP) de transition permettant ainsi de définir une trajectoire d'approche complète jusqu'à ladite première position (PTP₁) prédite d'interception,
- connaissant une longueur de chaque branche de ladite trajectoire d'approche et en considérant ladite deuxième vitesse dudit giravion (30) pour voler de ladite deuxième position jusqu'audit point (TDN) et une décélération connue dudit giravion (30) entre lesdits points (TDN) et (MRK), on calcule un temps de vol (T_{MRK}) nécessaire pour voler de ladite deuxième position jusqu'audit point (MRK),
- à partir de ladite première position de ladite cible (20), on calcule une seconde position (PTP₂) prédite d'interception en considérant que ladite cible (20) se déplace à ladite première vitesse, selon ladite première route pendant ledit temps de vol (T_{MRK}),
- on calcule une distance intermédiaire entre ladite première position (PTP₁) prédite d'interception et la seconde position (PTP₂) prédite d'interception
- si ladite distance intermédiaire est inférieure ou égale à un seuil de distance, alors ladite trajectoire d'approche est figée avec ledit point (MRK) de mise en vol stationnaire relatif, ledit point (TDN) de début de descente, ledit point (TP) de transition ainsi que ladite position (PTP) prédite d'interception égale à ladite première position (PTP₁) prédite d'interception et
- si ladite distance intermédiaire est supérieure audit seuil de distance, on réitère ladite troisième détermination en considérant ladite première position (PTP₁) prédite d'interception égale à ladite seconde position (PTP₂) prédite d'interception.

10. Procédé selon l'une quelconque des revendications 1 à 9,
**caractérisé en ce que** ledit point (MRK) de mise en vol stationnaire relatif dudit giravion (30) vis-à-vis de ladite cible (20) est déterminé afin d'être situé à une hauteur égale à une somme d'une hauteur connue de ladite cible (20) et d'une marge de sécurité.

11. Procédé selon l'une quelconque des revendications 1 à 10,
**caractérisé en ce que** ledit point (MRK) de mise en vol stationnaire relatif de ladite trajectoire active est modifiable par un équipage dudit giravion (30).

12. Procédé selon l'une quelconque des revendications 1 à 11,
**caractérisé en ce que** ladite trajectoire active est gelée lorsque ledit giravion (30) est situé à une distance d'un des points caractéristiques de ladite trajectoire active inférieure ou égale à un seuil de proximité.

13. Procédé selon la revendication 12,
**caractérisé en ce que** si ladite distance entre ladite position prédite d'interception (PTP) de ladite trajectoire requise et ledit point (MRK) de mise en vol stationnaire relatif de ladite trajectoire active est inférieure à ladite distance de sécurité, ledit point (MRK) de mise en vol stationnaire relatif de ladite trajectoire active est mis à jour avec ledit point (MRK) de mise en vol stationnaire relatif de ladite trajectoire requise afin de respecter ladite distance de sécurité.

14. Procédé selon la revendication 12,
**caractérisé en ce que**, ladite distance de sécurité étant égale à une somme d'une distance intermédiaire constante et d'une marge de sécurité variable, si ladite distance entre ladite position (PTP) prédite d'interception de ladite trajectoire requise et ledit point (MRK) de mise en vol stationnaire relatif de ladite trajectoire active est inférieure à ladite distance intermédiaire constante, ledit point (MRK) de mise en vol stationnaire relatif de ladite trajectoire active est mis à jour est mis à jour avec ledit point (MRK) de mise en vol stationnaire relatif de ladite trajectoire requise afin de respecter une distance de sécurité égale à ladite distance intermédiaire constante.

15. Procédé selon l'une quelconque des revendications 1 à 14,
**caractérisé en ce que** ledit procédé comporte une phase d'affichage (400) sur un dispositif de visualisation (14) de ladite position (PTP) prédite de ladite cible (20) lorsque ledit giravion (30) est situé à une distance d'affichage d'un point caractéristique de ladite trajectoire active.

16. Procédé d'aide à une approche d'un giravion (30) sur une cible (20) mobile et à mise en vol stationnaire relatif dudit giravion (30) vis-à-vis de ladite cible (20), ledit giravion (30) étant muni de :
- un système de gestion de vol (11) comportant au moins un calculateur (12) et au moins une mémoire (13),
- un dispositif d'acquisition (15) d'une première position, d'une première vitesse et d'une première route de ladite cible (20),
- un dispositif de localisation (16) permettant de fournir une deuxième position, une deuxième vitesse et une deuxième route dudit giravion (30),
- un dispositif de mesure (19) des conditions de vent à proximité dudit giravion (30) permettant de mesurer une troisième vitesse et une direction du vent subi par ledit giravion (30), et
- un pilote automatique (36),
**caractérisé en ce que** ladite trajectoire active établie par le procédé d'établissement d'une trajectoire d'approche d'un giravion (30) sur une cible (20) mobile et de mise en vol stationnaire relatif dudit giravion (30) vis-à-vis de ladite cible (20) selon l'une quelconque des revendications 1 à 15 est suivie automatiquement par ledit giravion (30).

17. Système d'établissement (10) d'une trajectoire d'approche d'un giravion (30) sur une cible (20) mobile et de mise en vol stationnaire relatif dudit giravion (30) vis-à-vis de ladite cible (20), ledit système d'établissement (10) comportant :
- un système de gestion de vol (11) muni d'au moins un calculateur (12) et au moins une mémoire (13),
- un dispositif d'acquisition (15) d'une première position, d'une première vitesse et d'une première route de ladite cible (20),
- un dispositif de localisation (16) permettant de fournir une deuxième position, une deuxième vitesse et une deuxième route dudit giravion (30), et
- un dispositif de mesure (19) des conditions de vent à proximité dudit giravion (30), à savoir une troisième vitesse et une direction du vent subi par ledit giravion (30),
**caractérisé en ce que** ledit système d'établissement (10) met en oeuvre le procédé selon l'une quelconque des revendications 1 à 15.

## Patentansprüche

1. Verfahren zum Erstellen einer Annäherungs-Flugbahn eines Drehflügelflugzeugs (30) an ein sich bewegendes Ziel (20) und zum Übergang in Schwebflug des Drehflügelflugzeugs (30) in Bezug auf das Ziel (20),
wobei das Drehflügelflugzeug (30) ausgestattet ist mit:
- einem Flugmanagementsystem (11), das mindestens einen Rechner (12) und mindestens einen Speicher (13) umfasst,
- einer Vorrichtung (15) zum Erfassen einer ersten Position, einer ersten Geschwindigkeit und eines ersten Weges des beweglichen Ziels (20),
- einer Ortungsvorrichtung (16) zum Bereitstellen einer zweiten Position, einer zweiten Geschwindigkeit und eines zweiten Weges des Drehflügelflugzeugs (30), und
- einer Vorrichtung (19) zum Messen der Windbedingungen in der Nähe des Drehflügelflugzeugs (30), zum Messen einer dritten Geschwindigkeit und einer Richtung des Windes, dem das Drehflügelflugzeug (30) ausgesetzt ist,
**dadurch gekennzeichnet, dass** das Verfahren umfasst:
- eine Vorphase des Erstellens (100) einer anfänglichen Flugbahn zur Annäherung und zum Übergang in relativen Schwebeflug des Drehflügelflugzeugs (30) in Bezug zum Ziel (20), wobei die anfängliche Flugbahn als eine aktive Flugbahn definiert ist, der das Drehflügelflugzeug (30) zum Erreichen des Ziels (20) folgen muss,
- eine Phase des Erstellens (200) einer erforderlichen Flugbahn zur Annäherung und zum Übergang in relativen Schwebeflug des Drehflügelflugzeugs (30) in Bezug zum Ziel (20) in Abhängigkeit von möglichen Veränderungen der Eigenschaften des Ziels (20), des Drehflügelflugzeugs (30) und des Windes, dem das Drehflügelflugzeug (30) ausgesetzt ist, wobei die Phase des Erstellens (200) einer erforderlichen Flugbahn während des Fluges des Drehflügelflugzeugs zum Ziel (20) durchgeführt wird,
und
- eine Phase des Aktualisierens (300) der aktiven Flugbahn durch die erforderliche Flugbahn, um die Sicherheit der aktiven Flugbahn zu gewährleisten,
wobei die Vorphase des Erstellens (100) der anfänglichen Flugbahn und die Phase des Erstellens (200) der erforderlichen Flugbahn die folgenden Schritte in gleicher Weise umfassen:
- einen Schritt des Messens (110, 210) der Eigenschaften des Ziels (20), des Drehflügelflugzeugs (30) und des Windes, dem das Drehflügelflugzeug (30) ausgesetzt ist, mit den folgenden Teilschritten:
• eine erste Erfassung (111, 211) der ersten Position, der ersten Geschwindigkeit und des ersten Weges des Ziels (20),
• eine zweite Erfassung (112, 212) der zweiten Position, der zweiten Geschwindigkeit und des zweiten Weges des Drehflügelflugzeugs (30), und
• eine dritte Erfassung (113, 213) der dritten Geschwindigkeit und Richtung des Windes, dem das Drehflügelflugzeug (30) ausgesetzt ist,
- einen Schritt des Erstellens (120, 220) der Eigenschaften der Flugbahn zur Annäherung und zum Übergang in relativen Schwebeflug des Drehflügelflugzeugs (30) in Bezug zum Ziel (20) mit den folgenden Teilschritten:
• eine erste Bestimmung (121, 221) einer vorhergesagten Flugbahn (23) des Ziels (20),
• eine zweite Bestimmung (122, 222) einer Abstiegsachse für das Drehflügelflugzeug (30) zu dem Ziel (20), wobei die Abstiegsachse so nah wie möglich an dem ersten Weg des Ziels (20) definiert ist, unter Berücksichtigung der dritten Geschwindigkeit und der Richtung des Windes, dem das Drehflügelflugzeug (30) ausgesetzt ist, und der Betriebsbeschränkungen des Drehflügelflugzeugs (30),
• eine dritte Bestimmung (123, 223) eines Eintrittspunkts in relativen Schwebeflug (MRK) des Drehflügelflugzeugs (30) in Bezug zum Ziel (20) und einer vorhergesagten Position (PTP) des Abfangens des Ziels (20) durch das Drehflügelflugzeug (30), wobei sich der Eintrittspunkt in relativen Schwebeflug (MRK) und die vorhergesagte Abfangposition (PTP) auf der Abstiegsachse befinden,
• eine vierte Bestimmung (124, 224) eines Abstiegsstartpunktes (TDN) für das Drehflügelflugzeug (30) zu dem Ziel (20), wobei sich der Abstiegsstartpunkt (TDN) auf der durch den Eintrittspunkt in relativen Schwebeflug (MRK) verlaufenden Abstiegsachse befindet und
• eine fünfte Bestimmung (125, 225) eines Übergangspunktes (TP), der von dem Drehflügelflugzeug (30) erreichbar ist und dem Drehflügelflugzeug (30) erlaubt, den Abstiegsstartpunkt (TDN) wieder zu erreichen.

2. Verfahren nach Anspruch 1,
**dadurch gekennzeichnet, dass** die Flugbahn zur Annäherung und zum Eintritt in relativen Schwebeflug des Drehflügelflugzeugs (30) in Bezug zum Ziel (20) so definiert ist, dass ein Sicherheitsabstand den Eintrittspunkt in den relativen Schwebeflug (MRK) und die vorhergesagte Position (PTP) des Abfangens des Ziels (20) trennt, wobei der Sicherheitsabstand gleich einer Summe aus einem konstanten Zwischenabstand und einer variablen Sicherheitsmarge ist, die von den Eigenschaften des Ziels (20), des Drehflügelflugzeugs (30) oder des Windes, dem das Drehflügelflugzeug (30) ausgesetzt ist, abhängt.

3. Verfahren nach Anspruch 2,
**dadurch gekennzeichnet, dass** die Sicherheitsmarge als Funktion der ersten Geschwindigkeit variabel ist.

4. Verfahren nach Anspruch 2,
**dadurch gekennzeichnet, dass** eine Integrität der zweiten Position des Drehflügelflugzeugs (30) während der zweiten Erfassung (112, 212) bereitgestellt wird und die Sicherheitsmarge gleich der Integrität ist.

5. Verfahren nach einem der Ansprüche 1 bis 4,
**dadurch gekennzeichnet, dass** ein Seitenwindschwellenwert und ein Rückenwindschwellenwert gemäß den Betriebsbegrenzungen des Drehflügelflugzeugs (30) bestimmt werden, dann
- die Abstiegsachse gleich dem ersten Weg des Ziels (20) und in einer vertikalen Ebene, die durch den ersten Weg verläuft, definiert wird, wenn die Windgeschwindigkeit, der das Drehflügelflugzeug (30) ausgesetzt ist, unterhalb des Seitenwindschwellenwerts und des Rückenwindschwellenwerts liegt, und
- die Abstiegsachse so nah wie möglich an dem ersten Weg des Ziels (20) definiert und so definiert wird, dass das Drehflügelflugzeug (30) einem Seitenwind, der kleiner als der Seitenwindschwellenwert ist, und einem Rückenwind, der kleiner als der Rückenwindschwellenwert ist, ausgesetzt ist, wenn die dritte Windgeschwindigkeit, der das Drehflügelflugzeug (30) ausgesetzt ist, größer als oder gleich dem Rückenwindschwellenwert und/oder dem Seitenwindschwellenwert ist.

6. Verfahren nach einem der Ansprüche 1 bis 4,
**dadurch gekennzeichnet, dass** die zweite Bestimmung (122, 222) der Abstiegsachse die folgenden Teilschritte umfasst:
Bestimmen (601) eines Seitenwindschwellenwerts Cw_{Lim} und eines Rückenwindschwellenwerts Tw_{Lim} in Abhängigkeit von den Betriebsgrenzen des Drehflügelflugzeugs (30),
Bestimmen (602) eines Iterationsschrittes STEP,
Bestimmen (603) der Abstiegsachse, die gleich dem ersten Weg des Ziels (20) ist und in einer durch den ersten Weg verlaufenden vertikalen Ebene angeordnet ist, wobei die Abstiegsachse durch einen Abstiegskurs A_{TDN} gekennzeichnet ist,
- Berechnen (604) einer Geschwindigkeit des Seitenwindes Cw und einer Geschwindigkeit des Rückenwindes Tw, denen das Drehflügelflugzeug (30) ausgesetzt wäre, wenn das Drehflügelflugzeug (30) entlang der Abstiegsachse flöge,
- Vergleichen (605) der Geschwindigkeit des Seitenwindes Cw mit dem Seitenwindschwellenwert Cw_{Lim} und der Geschwindigkeit des Rückenwindes Tw mit dem Rückenwindschwellenwert Tw_{Lim},
- Validieren der Abstiegsachse, wenn die Geschwindigkeit des Seitenwindes Cw niedriger ist als der Seitenwindschwellenwert Cw_{Lim} und die Rückenwindgeschwindigkeit Tw niedriger ist als der Seitenwindschwellenwert Tw_{Lim},
- Durchführen der folgenden Teilschritte, wenn die Geschwindigkeit des Seitenwindes Cw nicht kleiner als der Seitenwindschwellenwert Cw_{Lim} ist oder wenn die Seitenwindgeschwindigkeit Tw nicht kleiner als der Seitenwindschwellenwert Tw_{Lim} ist:
• Berechnen (606) eines Windwinkels Δ zwischen einer Richtung Aw des Windes, dem das Drehflügelflugzeug (30) ausgesetzt ist, und der Abstiegsachse,
• wenn der Windwinkel Δ ein positiver Winkel ist und der Abstiegskurs A_{TDN} größer ist als ein Kurs, der durch die Richtung Aw, vermindert um einen flachen Winkel von 180° gebildet wird, Umkehren des Vorzeichens des Iterationsschritts STEP,
• wenn der Windwinkel A ein negativer Winkel ist und der Abstiegskurs ATDN größer ist als ein Kurs, der durch die Richtung Aw gebildet wird, zu der ein flacher Winkel von 180° hinzugefügt wird, Umkehren des Vorzeichens des Iterationsschritts,
• Iterieren (607) der Abstiegsachse durch Hinzufügen eines Iterationsschritts STEP zu dem Abstiegskurs A_{TDN},
• Berechnen (608) der Geschwindigkeit des Seitenwindes Cw und des Rückenwindes Tw, denen das Drehflügelflugzeug (30) ausgesetzt wäre, wenn das Drehflügler (30) entlang der Abstiegsachse flöge,
• Vergleichen (609) der Geschwindigkeit des Seitenwindes Cw mit dem Seitenwindschwellenwert Cw_{Lim} und der Rückenwindgeschwindigkeit Tw mit dem Rückenwindschwellenwert Tw_{Lim},
• Validieren der Abstiegsachse, wenn die Geschwindigkeit des Seitenwindes Cw niedriger ist als der Seitenwindschwellenwert Cw_{Lim} und die Rückenwindgeschwindigkeit Tw niedriger ist als der Rückenwindschwellenwert Tw_{Lim},
• wobei, wenn die Geschwindigkeit des Seitenwindes Cw nicht kleiner als der Seitenwindschwellenwert Cw_{Lim} ist oder wenn die Geschwindigkeit des Rückenwindes Tw nicht kleiner als der Rückenwindschwellenwert Tw_{Lim} ist, die zweite Bestimmung (122, 222) bei der Iteration (607) der Abstiegsachse wieder einsetzt.

7. Verfahren nach einem der Ansprüche 1 bis 6,
**dadurch gekennzeichnet, dass** die Abstiegsachse des aktiven Weges automatisch durch eine erforderliche Abstiegsachse aktualisiert wird, die durch die erforderliche Flugbahn definiert ist, wenn die erforderliche Abstiegsachse innerhalb eines vorbestimmten Winkelbereichs um eine durch die anfängliche Flugbahn definierte anfängliche Abstiegsachse liegt.

8. Verfahren nach Anspruch 7,
**dadurch gekennzeichnet, dass** die Abstiegsachse der aktiven Flugbahn nach einer Aktion einer Besatzung des Drehflüglers (30) durch die erforderliche Abstiegsachse aktualisiert wird, wenn sich die erforderliche Abstiegsachse außerhalb des vorbestimmten Winkelbereichs um die anfängliche Abstiegsachse befindet.

9. Verfahren nach einem der Ansprüche 1 bis 8,
**dadurch gekennzeichnet, dass** die dritte Bestimmung (123, 223), die vierte Bestimmung (124, 224) und die fünfte Bestimmung (125, 225) wie folgt untergliedert sind::
- Definieren einer ersten vorhergesagten Position (PTP₁), die gleich der ersten Position des Ziels (20) ist,
- ausgehend von der ersten vorhergesagten Position des Abfangens (PTP₁), Berechnen der Abstiegsachse , des Eintrittspunkts in relativen Schwebeflug (MRK) und des Abstiegsstartpunkts (TDN),
- Berechnen des Übergangspunkts (TP), wodurch es möglich wird, eine Flugbahn der vollständigen Annäherung bis an die erste vorhergesagte Abfangposition (PTP1) zu definieren,
- in Kenntnis einer Länge jedes Zweiges der Annäherungs-Flugbahn und unter Berücksichtigung der zweiten Geschwindigkeit des Drehflügelflugzeugs (30), um von der zweiten Position zu dem Punkt (TDN) zu fliegen, und einer bekannten Verzögerung des Drehflügelflugzeugs (30) zwischen den Punkten (TDN) und (MRK), Berechnen einer Flugzeit (T_{MRK}), die notwendig ist, um von der zweiten Position zu dem Punkt (MRK) zu fliegen,
- ausgehend von der ersten Position des Ziels (20), Berechnen einer vorhergesagten zweiten Abfangposition (PTP2) unter Berücksichtigung der Tatsache, dass sich während der Flugzeit (T_{MRK}) das Ziel (20) mit der ersten Geschwindigkeit entlang des ersten Weges bewegt,
- Berechnen eines Zwischenabstandes zwischen der ersten vorhergesagten Abfangposition (PTP₁) und der zweiten vorhergesagten Abfangposition (PTP₂),
- wenn der Zwischenabstand kleiner oder gleich einem Entfernungsschwellenwert ist, Einfrieren der Annäherungs-Flugbahn mit dem Eintrittspunkt in relativen Schwebeflug (MRK), dem Abstiegsstartpunkt (TDN), dem Übergangspunkt (TP) und der vorhergesagten Abfangposition (PTP), die gleich der ersten vorhergesagten Abfangposition (PTP₁) ist, und
- wenn der Zwischenabstand größer als der Entfernungsschwellenwert ist, Wiederholen der dritten Bestimmung, wobei die erste vorhergesagte Abfangsposition (PTP₁) gleich der zweiten vorhergesagten Abfangsposition (PTP₂) angenommen wird.

10. Verfahren nach einem der Ansprüche 1 bis 9,
**dadurch gekennzeichnet, dass** der Eintrittspunkt in relativen Schwebeflug (MRK) des Drehflügelflugzeugs (30) in Bezug auf das Ziel (20) so bestimmt ist, dass er sich auf einer Höhe befindet, die gleich einer Summe aus einer bekannten Höhe des Ziels (20) und einer Sicherheitsmarge ist.

11. Verfahren nach einem der Ansprüche 1 bis 10,
**dadurch gekennzeichnet, dass** der Eintrittspunkt in relativen Schwebeflug (MRK) der aktiven Flugbahn durch eine Besatzung des Drehflügelflugzeugs (30) veränderbar ist.

12. Verfahren nach einem der Ansprüche 1 bis 11,
**dadurch gekennzeichnet, dass** die aktive Flugbahn eingefroren wird, wenn sich das Drehflügelflugzeug (30) in einem Abstand von einem der charakteristischen Punkte der aktiven Flugbahn befindet, der kleiner als oder gleich einem Annäherungsschwellenwert ist.

13. Verfahren nach Anspruch 12,
**dadurch gekennzeichnet, dass**, wenn der Abstand zwischen der vorhergesagten Abfangposition (PTP) der erforderlichen Flugbahn und dem Eintrittspunkt in relativen Schwebeflug (MRK) der aktiven Flugbahn kleiner als der Sicherheitsabstand ist, der Eintrittspunkt in relativen Schwebeflug (MRK) der aktiven Flugbahn mit dem Eintrittspunkt in relativen Schwebeflug (MRK) der erforderlichen Flugbahn aktualisiert wird, um den Sicherheitsabstand einzuhalten.

14. Verfahren nach Anspruch 12,
**dadurch gekennzeichnet, dass** der Sicherheitsabstand gleich einer Summe aus einem konstanten Zwischenabstand und einer variablen Sicherheitsmarge ist, und dass, wenn der Abstand zwischen der vorhergesagten Abfangposition (PTP) der erforderlichen Flugbahn und dem Eintrittspunkt in relativen Schwebeflug (MRK) der aktiven Flugbahn kleiner als der konstante Zwischenabstand ist, der Eintrittspunkt in relativen Schwebeflug (MRK) der aktiven Flugbahn mit dem Eintrittspunkt in relativen Schwebeflug (MRK) der erforderlichen Flugbahn aktualisiert wird, um einen Sicherheitsabstand einzuhalten, der dem konstanten Zwischenabstand entspricht.

15. Verfahren nach einem der Ansprüche 1 bis 14,
**dadurch gekennzeichnet, dass** das Verfahren eine Phase des Anzeigens (400) der vorhergesagten Position (PTP) des Ziels (20) auf einer Anzeigevorrichtung (14) umfasst, wenn sich das Drehflügelflugzeug (30) in einem Anzeigeabstand von einem charakteristischen Punkt der aktiven Flugbahn befindet.

16. Verfahren zur Unterstützung bei der Annäherung eines Drehflügelflugzeugs (30) an ein sich bewegendes Ziel (20) und beim Übergang in Schwebflug des Drehflügelflugzeugs (30) in Bezug auf das Ziel (20), wobei das Drehflügelflugzeug (30) ausgestattet ist mit:
- einem Flugmanagementsystem (11), das mindestens einen Rechner (12) und mindestens einen Speicher (13) umfasst,
- einer Vorrichtung (15) zum Erfassen einer ersten Position, einer ersten Geschwindigkeit und eines ersten Weges des beweglichen Ziels (20),
- einer Ortungsvorrichtung (16) zum Bereitstellen einer zweiten Position, einer zweiten Geschwindigkeit und eines zweiten Weges des Drehflügelflugzeugs (30), und
- einer Vorrichtung (19) zum Messen der Windbedingungen in der Nähe des Drehflügelflugzeugs (30), zum Messen einer dritten Geschwindigkeit und der Richtung des Windes, dem das Drehflügelflugzeug (30) ausgesetzt ist,
- einem Autopiloten (36),
**dadurch gekennzeichnet, dass** die durch das Verfahren zum Erstellen einer Annäherungs-Flugbahn eines Drehflügelflugzeugs (30) an ein sich bewegendes Ziel (20) und zum Übergang in Schwebflug des Drehflügelflugzeugs (30) in Bezug auf das Ziel (20) nach einem der Ansprüche 1 bis 15 erstellte aktive Flugbahn von dem Drehflügelflugzeug (30) automatisch verfolgt wird.

17. System zum Erstellen (10) einer Annäherungs-Flugbahn eines Drehflügelflugzeugs (30) an ein sich bewegendes Ziel (20) und zum Übergang in Schwebflug des Drehflügelflugzeugs (30) in Bezug auf das Ziel (20),
wobei das System (10) umfasst:
- ein Flugmanagementsystem (11), das mindestens einen Rechner (12) und mindestens einen Speicher (13) umfasst,
- eine Vorrichtung (15) zum Erfassen einer ersten Position, einer ersten Geschwindigkeit und eines ersten Weges des Ziels (20),
- eine Ortungsvorrichtung (16) zum Bereitstellen einer zweiten Position, einer zweiten Geschwindigkeit und eines zweiten Weges des Drehflügelflugzeugs (30), und
- eine Vorrichtung (19) zum Messen der Windbedingungen in der Nähe des Drehflügelflugzeugs (30), nämlich einer dritten Geschwindigkeit und einer Richtung des Windes, dem das Drehflügelflugzeug (30) ausgesetzt ist,
**dadurch gekennzeichnet, dass** das System (10) das Verfahren nach einem der Ansprüche 1 bis 15 durchführt.

## Claims

1. Method for establishing an approach trajectory of a rotorcraft (30) onto a moving target (20) and the relative stationary flight of said rotorcraft (30) with respect to said target (20), said rotorcraft (30) being equipped with:
- a flight management system (11) comprising at least one computer (12) and at least one memory (13);
- a device (15) for acquiring a first position, a first speed and a first route of said moving target (20);
- a locating device (16) for providing a second position, a second speed and a second route of said rotorcraft (30), and
- an locating device (16) for providing a second position, a second speed and a second route of said rotorcraft (30), and
- a device (19) for measuring the wind conditions in the vicinity of said rotorcraft (30) enabling the measurement of a third speed and wind direction experienced by said rotorcraft (30),
**characterised in that** this method comprises:
- a preliminary establishment phase (100) of an initial approach and relative stationary flight trajectory of this rotorcraft (30) with respect to said target (20), said initial trajectory being defined as an active trajectory to be followed by said rotorcraft (30) to reach said target (20);
- a phase of establishment (200) of a required approach and relative stationary flight trajectory of said rotorcraft (30) with respect to said target (20) according to possible variations in said characteristics of said target (20), said rotorcraft (30) and said wind experienced by said rotorcraft (30), said phase of establishment (200) of a required trajectory being undertaken during the flight of said rotorcraft towards said target (20), and
- an update phase (300) of said active trajectory by said required trajectory in order to guarantee the safety of said active trajectory;
said preliminary establishment phase (100) of said initial trajectory and said establishment phase (200) of said required trajectory jointly comprising the following steps:
- a step of measuring (110, 210) the characteristics of said target (20), said rotorcraft (30) and said wind experienced by said rotorcraft (30) with the following sub-steps:
• a first acquisition (111, 211) of said first position, said first speed and said first route of said target (20),
• a second acquisition (112, 212) of said second position, said second speed and said second route of said rotorcraft (30), and
• a third acquisition (113, 213) of said third speed and direction of said wind experienced by said rotorcraft (30),
- a step of establishment (120, 220) of the characteristics of said approach and relative stationary flight trajectory of said rotorcraft (30) with respect to said target (20) comprising the following sub-steps:
• a first determination (121, 221) of a predicted trajectory (23) of said target (20);
• a second determination (125, 222) of an axis of descent for said rotorcraft (30) to said target (20), said axis of descent being defined as close as possible to said first route of said target (20), taking into account said third speed and said direction of said wind experienced by said rotorcraft as well as the operating limitations of said rotorcraft (30);
• a third determination (123, 223) of a relative stationary flight point (MRK) of said rotorcraft (30) with respect to said target (20) and a predicted interception position (PTP) of said target (20) by said rotorcraft (30), said relative stationary flight point (MRK) and said predicted interception position (PTP) being located on said axis of descent;
• a fourth determination (124, 224) of a point (TDN) of commencement of descent for said rotorcraft (30) towards said target (20), said point (TDN) of commencement of descent being located on said axis of descent passing through said point (MRK) of relative stationary flight; and
• a fifth determination (125, 225) of a transition point (TP) attainable by said rotorcraft (30) and allowing said rotorcraft (30) to reach said point (TDN) of commencement of descent.

2. Method according to claim 1, **characterised in that** said approach and relative stationary flight trajectory of said rotorcraft (30) with respect to said target (20) is defined such that a safety distance separates said relative stationary flight point (MRK) and said predicted interception position (PTP) of said target (20), said safety distance being equal to a sum of a constant intermediate distance and a variable safety margin according to said characteristics of said target (20), said rotorcraft (30) or said wind experienced by said rotorcraft (30).

3. Method according to claim 2, **characterised in that** said safety margin is variable according to said first speed.

4. Method according to claim 2, **characterised in that** an integrity of said second position of said rotorcraft (30) is provided during the said second acquisition (112, 212) and said safety margin is equal to said integrity.

5. Method according to any one of claims 1 to 4, **characterised in that** a crosswind threshold and a tailwind threshold are determined according to said operating limitations of said rotorcraft (30), and then
- said axis of descent is defined as equivalent to said first route of said target (20) and in a vertical plane passing through said first route when said third speed of the wind experienced by said rotorcraft (30) is less than said crosswind threshold and said tailwind threshold, and
- said axis of descent is defined as close as possible to said first route of said target (20) and such that said rotorcraft (30) is subjected to a crosswind less than said crosswind threshold and a tailwind less than said tailwind threshold when said third speed of the wind experienced by said rotorcraft (30) is greater than or equal to said tailwind threshold and/or said crosswind threshold.

6. Method according to any one of claims 1 to 4, **characterised in that** said second determination (122, 222) of said axis of descent comprises the following sub-steps:
- a determination (601) of a crosswind threshold Cw_{LIM} and a tailwind threshold Tw_{Lim} based on said operating limitations of said rotorcraft (30);
- a determination (602) of a STEP iteration step;
- a determination (603) of said axis of descent equal to said first route of said target (20) and located in a vertical plane passing through said first road, said axis of descent being **characterised by** a descent heading A_{TDN};
- a calculation (604) of a crosswind speed C_{w} and a tailwind speed T_{w} experienced by said rotorcraft (30) if said rotorcraft (30) were flying along said axis of descent;
- a comparison (605) of said speed of said crosswind C_{w} with said crosswind threshold Cw_{Lim} and of said tailwind speed T_{w} with said tailwind speed threshold Tw_{Lim};
- if said crosswind speed Cw is lower than said crosswind threshold Cw_{Lim} and if said tail wind speed Tw is lower than said tail wind threshold Tw_{Lim}, said axis of descent is validated;
- if said crosswind speed Cw is not less than said crosswind threshold Cw_{Lim} or if said tailwind speed Tw is not less than said tailwind threshold Tw_{Lim}, the following sub-steps are performed:
• a calculation (606) of a wind angle Δ between a direction Aw of said wind experienced by said rotorcraft (30) and said axis of descent;
• if said wind angle Δ is a positive angle and if said descent heading A_{TDN} is greater than a heading formed by said direction Aw from which a flat angle of 180° is removed, the sign of said STEP iteration step is reversed;
• if said wind angle Δ is a negative angle and said descent heading A _{TDN} is greater than a heading formed by said direction Aw to which a flat angle of 180° is added, the sign of said iteration step is reversed;
• an iteration (607) of said axis of descent by adding a STEP iteration step to said descent heading A_{TDN};
• a calculation (608) of said velocity of said crosswind Cw and said tailwind speed Tw experienced by said rotorcraft (30) if said rotorcraft (30) were flying along said axis of descent;
• a comparison (609) of said crosswind speed Cw with said crosswind threshold Cw_{Lim} and of said tailwind speed Tw with said tail wind threshold Tw_{Lim};
• if said crosswind speed Cw is lower than said crosswind threshold Cw and said tailwind speed Tw is lower than said tailwind threshold Tw_{Lim}, said axis of descent is validated;
• if said crosswind speed Cw is not less than said crosswind threshold Cw_{Lim} or if said tailwind speed Tw is not less than said tailwind threshold Tw_{Lim}, said second determination (122, 222) resumes at said iteration (607) of said axis of descent.

7. Method according to any one of claims 1 to 6, **characterised in that** said axis of descent of said active trajectory is automatically updated by a required axis of descent defined by said required trajectory if said required axis of descent is included in a predetermined angular range around an initial axis of descent defined by said initial trajectory.

8. Method according to claim 7, **characterised in that** said axis of descent of said active trajectory is updated by said required axis of descent following an action by a crew of said rotorcraft (30) if said required axis of descent is outside said predetermined angular range around said initial axis of descent.

9. Method according to any one of claims 1 to 8, **characterised in that** said third determination (123, 223), fourth determination (124, 224) and fifth determination (125, 225) are broken down as follows:
- Definition of a first predicted interception position (PTP₁) equivalent to said first position of said target (20);
- Calculation using this first predicted interception position (PTP₁) of said axis of descent, said relative stationary flight point (MRK) and said point of commencement of descent (TDN);
- Calculation of said transition point (TP) enabling the definition of a complete approach trajectory up to said first predicted interception position (PTP₁);
- Calculation of a flight time (T_{MRK}) required to fly from said second position to said point (MRK) with the knowledge of a length of each section of said approach trajectory and taking into consideration said second speed of said rotorcraft (30) to fly from said second position up to said point (TDN) and a known deceleration of said rotorcraft (30) between said points (TDN) and (MRK);
- Calculation of a second predicted interception position (PTP₂) using the said first position of said target (20) taking into consideration the fact that said target (20) is moving at said first speed, according to said first route during said flight time (T_{MRK});
- Calculation of an intermediate distance between said first predicted interception position (PTP₁) and the second predicted interception position (PTP₂);
- If said intermediate distance is lower or equivalent to a distance threshold, then said approach trajectory is fixed with said relative stationary flight point (MRK), said point of commencement of descent (TDN); said transition point (TP) as well as said predicted interception position (PTP) equivalent to said first predicted interception position (PTP₁); and
- If said intermediate distance is greater than said distance threshold, said third determination is repeated by taking into consideration said first predicted interception position (PTP₁) equivalent to the said second predicted interception position (PTP₂);

10. Method according to any one of claims 1 to 9, **characterised in that** said relative stationary flight point (MRK) of said rotorcraft (30) with respect to said target (20) is determined in order to be located at a height equivalent to a sum of a known height of said target and a safety margin.

11. Method according to any one of claims 1 to 10, **characterised in that** said relative stationary flight point (MRK) of said active trajectory is modifiable by a crew of said rotorcraft (30).

12. Method according to any one of claims 1 to 11, **characterised in that** said active trajectory is frozen when said rotorcraft (30) is located at a distance from one of the characteristic points of said active trajectory lower than or equivalent to a proximity threshold.

13. Method according to claim 12, **characterised in that** if said distance between said predicted interception position (PTP) of said required trajectory and said relative stationary flight point (MRK) of said active trajectory is less than said safety distance, said relative stationary flight point (MRK) of said required trajectory in order to comply with this safety distance.

14. Method according to claim 12, **characterised in that** said safety distance is equivalent to a sum of a constant intermediate distance and a variable safety margin, if said distance between said predicted interception position (PTP) of said required trajectory and said relative stationary flight point (MRK) of said active trajectory if less than said constant intermediate distance, said relative stationary flight point (MRK) of said active trajectory is updated with said relative stationary flight point (MRK) of said required trajectory in order to observe a safety distance equivalent to said constant intermediate distance.

15. Method according to any one of claims 1 to 14, **characterised in that** this method includes a display phase (400) of said predicted position (PTP) of said target (20) on a visualisation device (14) when said rotorcraft (30) is located at a display distance from a characteristic point of said active trajectory.

16. Method for aiding an approach of a rotorcraft (30) on a moving target (20) and a relative stationary flight of said rotorcraft (30) with respect to said target (20), said rotorcraft (30) being equipped with:
- a flight management system (11) comprising at least one computer (12) and at least one memory (13);
- a device (15) for acquiring a first position, a first speed and a first route of said target (20);
- a locating device (16) enabling the provision of a second position, a second speed and a second track of said rotorcraft (30), and
- a device (19) for measuring the wind conditions in the vicinity of said rotorcraft (30) enabling the measurement of a third speed and direction of wind experienced by said rotorcraft (30),
**characterised in that** said active trajectory established by the method for the establishment of an approach trajectory of a rotorcraft (30) on a moving target (20) and of the relative stationary flight of said rotorcraft (30) with respect to said target (20) according to any one of claims 1 to 15 is followed automatically by said rotorcraft (30).

17. System for the establishment (10) of an approach trajectory of a rotorcraft (30) on a moving target (20) and of the relative stationary flight of said rotorcraft (30) with respect to said target (20), said establishment system (10) comprising:
- a flight management system (11) comprising at least one computer (12) and at least one memory (13);
- a device (15) for acquiring a first position, a first speed and a first route of said target (20);
- a locating device (16) enabling the provision of a second position, a second speed and a second track of said rotorcraft (30), and
- a device (19) for measuring the wind conditions in the vicinity of said rotorcraft (30) i.e. a third speed and a wind direction experienced by said rotorcraft (30),
**characterised in that** this establishment system (10) implements the method according to any one of claims 1 to 15.
